# EUROPÄISCHE PATENTSCHRIFT

(11) **EP 3 595 878 B1**
(45) Veröffentlichungstag und Bekanntmachung des Hinweises auf die Patenterteilung: **10.08.2022**
(21) Anmeldenummer: 18711535.7
(22) Anmeldetag: 14.03.2018
(51) Int. Cl.: B29C 70/46, B29C 70/40, B29C 70/44, B29C 70/54, B29B 11/16, B29C 35/08, B29K 101/12

(54) **VERFAHREN UND ANLAGE ZUM KONSOLIDIEREN VON FASERVERBUNDSTRUKTUREN**
METHOD AND PLANT FOR CONSOLIDATING FIBRE COMPOSITE STRUCTURES
PROCÉDÉ ET INSTALLATION POUR CONSOLIDER DES STRUCTURES RENFORCÉES PAR DES FIBRES

(30) Priorität: 14.03.2017 DE 102017105450
(43) Veröffentlichungstag der Anmeldung: 22.01.2020
(73) Patentinhaber: Dieffenbacher GmbH Maschinen- und Anlagenbau, 75031 Eppingen (DE)
(72) Erfinder: JUNG, Klaus, 75031 Eppingen (DE); GRAF, Matthias, 75031 Eppingen (DE)
(74) Vertreter: LBP Lemcke, Brommer & Partner Patentanwälte mbB
(86) Internationale Anmeldenummer: PCT/EP2018/056359
(87) Internationale Veröffentlichungsnummer: WO 2018/167129

(56) Entgegenhaltungen:
- DE-A1- 3 813 694
- DE-A1-102014 004 053

## Beschreibung

Die vorliegende Erfindung betrifft ein Verfahren zum Konsolidieren von Faserverbundstrukturen nach Anspruch 1 und eine Anlage zum Konsolidieren von Faserverbundstrukturen nach Anspruch 11 für beispielsweise Automobilbauteile.

Die Anwendungen für Faserverbundwerkstoffe sind über die vergangenen Jahrzehnte immer weiter gestiegen, insbesondere wenn sie als preiswerte Alternative zu den metallischen Werkstoffen gesehen werden konnten, mit den Vorteilen der Gestaltungsfreiheit und anwendungsspezifischer Formulierungsmöglichkeiten. Speziell der Werkstoff CFK (Carbon-faserverstärkter Kunststoff) hat ein extrem hohes Leichtbaupotential, wobei er sich zugleich durch seine hohe Festigkeit und sehr hohe Struktursteifigkeit auszeichnet. Letzteres ist beispielsweise im Automobilbau ein wichtiges Kriterium.

Die automatisierbare Herstellung der Preform stellt eine Schlüsseltechnologie im Herstellungsprozess von endlosfaserverstärkten Faserverbundbauteilen zur Realisierung einer effizienten Großserienfertigung mit reproduzierbarer stabiler Bauteilqualität dar. Aber auch bei sogenannten Hybridbauteilen, also formgepressten Blechen, die vornehmlich mit Carbonfaser-Halbzeugen verpresst werden, um kritische Belastungszonen zusätzlich zu verstärken, müssen sich alle Produktions-Einheiten anlagen- und steuerungstechnisch integrieren lassen, wenn eine hinreichende Produktivität erreicht werden soll.

Zur Herstellung von endlosfaserverstärkten Bauteilen werden heute überwiegend textile Faser-Halbzeuge wie mit einem Binder (Schmelzkleber) benetzte und/oder mit einer Matrix teilweise oder vollständig imprägnierte Faser-Garne und/oder Flächengebilde (sog. Prepregs) wie Faser-Gewebe, Faser-Gestricke, Faser-Gelege oder Faser-Matten verwendet. Die Matrix von faserverstärkten Kunststoffen hat die Aufgabe, die hochbelastbaren Fasern einzubetten (Stützfunktion) und deren Zwischenraum vollständig auszufüllen (Sperrfunktion).

An Binder- und/oder Matrix-Werkstoffen können grundsätzlich Materialien aus den Gruppen der Thermoplaste und ggf. zusätzlicher elastifizierender Komponenten, wie Elastomere, eingesetzt werden, welche sich in der Festigkeit, der maximalen Dehnung, der Einsatztemperatur, der Verarbeitungsgeschwindigkeit und der Chemikalienbeständigkeit unterscheiden.

Aus diesen Halbzeugen, die als Rollen oder Plattenware in Standardformaten zur Verfügung stehen, werden beispielsweise in einem Schneidprozess Zuschnitte erzeugt, die in der Regel das umgeformte Bauteil vollflächig auskleiden.

Alternativ können endlosfaserverstärkte Bauteile auch über Faser- oder auch als TapeLegeverfahren bekannt gewordene Verfahren wesentlich verschnittärmer bzw. verschnittfrei und damit ressourceneffizienter hergestellt werden. Speziell die Verwendung von Tapes, umfassend vorzugsweise unidirektionale Endlosfasern in einer thermoplastischen Matrix, erweist sich als eine sehr attraktive Prozessvariante. Mit einem "Tape" ist im Zusammenhang vorzugsweise jegliche Art von bahnförmigem Material, insbesondere ein Prepregmaterial, das beispielsweise eine Breite zwischen 30 und 200 mm aufweist, gemeint, welches für ein Ablegen mittels einer Tapelegevorrichtung geeignet ist. Mit "Prepegmaterial" sind vorliegend insbesondere Faser-Garne (Rovings), Faser-Gelege und/oder Faser-Gewebe gemeint, welche mit einem Binder benetzt und/oder mit einer Matrix, beispielsweise einer Thermoplastmatrix, teilweise oder vollständig imprägniert, insbesondere vorimprägniert, sind. Bei den "Fasern" handelt es sich insbesondere um Kohlenstofffasern, ist aber in gleicher Weise auch für Glasfasern oder andere, insbesondere künstlich hergestellte, Fasern anwendbar. Zur Verarbeitung von Tapes ist bekannt, diese mittels Tapelegevorrichtungen, insbesondere auch sogenannte Fiber-Placement-Vorrichtungen, von einer Spule oder Rolle abzuziehen, auf Länge zu schneiden und auf einen Legetisch bzw. einer bereits auf dem Legetisch abgelegten Tapestruktur abzulegen. Mit dem Ablegen eines Tapestreifens wird dieser über eine Anzahl an Ultraschall-Schweißköpfen punktweise mit der darunter liegenden Tapeschicht verbunden. Beispielhafte Tapelegevorrichtungen sind beispielsweise aus den Dokumenten WO 2014/083196 A1 und US 8,048,253 bekannt.

Nachdem so mittels Tapelegen von einzelnen Tapes, oder mittels Anordnen von großflächigen Zuschnitten, Faserverbundstrukturen mit einer gewünschten Form gelegt bzw. aufgebaut wurden, ist es erforderlich, die Faserverbundstrukturen in einem nachfolgenden Verfahrensschritt unter Einwirkung von Druck und Temperatur zu verpressen und so zu einem Laminat zu konsolidieren.

Ein beispielhaftes Verfahren zum Konsolidieren von Faserverbundstrukturen mit thermoplastischen und/oder thermoelastischen Polymeren ist aus dem Dokument DE 10 2014 004 053 A1 bekannt. In diesem Dokument wird, wie in Fig. 1 dargestellt, vorgeschlagen, eine zu konsolidierende Faserverbundstruktur 1 auf einer starren Unterlage 2 anzuordnen, sowie eine starre Abdeckung 3 auf der Faserverbundstruktur 1 zu platzieren, so dass sich die Faserverbundstruktur 1 in einem Zwischenraum zwischen der Unterlage 2 und der Abdeckung 3 befindet. Seitlich wird der Zwischenraum von einer Ringdichtung 5 aus nachgiebigem Material abgedichtet. Weiter sind Strahlungsquellen 4 vorgesehen, die über bzw. unter der Abdeckung 3 und der Unterlage 2 angeordnet sind und die elektromagnetische Strahlung, insbesondere Infrarotstrahlung erzeugen. Die Abdeckung 3 und die Unterlage 2 sind für die von den Strahlungsquellen 4 erzeugte elektromagnetische Strahlung durchlässig ausgebildet, so dass die elektromagnetische Strahlung durch die Unterlage 2 und die Abdeckung 3 hindurch in die Faserverbundstruktur 1 eingekoppelt werden kann. Um die Faserverbundstruktur 1 zu konsolidieren, wird die Faserverbundstruktur 1 durch die Unterlage 2 und die Abdeckung 3 hindurch mit der elektromagnetischen Strahlung bestrahlt, um das Imprägnierpolymer in einen plastifizierten, schmelzflüssigen Zustand zu überführen. Darüber hinaus wird der Zwischenraum zwischen der Unterlage 2 und der Abdeckung 3 mittels einer an einen in den Zwischenraum einmündenden Rohrstutzen 6 angeschlossenen Vakuumpumpe (nicht gezeigt), evakuiert, so dass infolge des von oben auf die Abdeckung 3 (oder auch zumindest bereichsweise von unten auf die Unterlage 2) einwirkenden Umgebungsdruckes die Faserverbundstruktur 1 unter Kompression der Ringdichtung 5 zwischen der Abdeckung 3 und der Unterlage 2 verpresst wird.

Vorteilhaft bei diesem Verfahren ist der geringe erforderliche anlagentechnische Aufwand, insbesondere der Verzicht auf Presswerkzeuge oder dergleichen, so dass sich das Verfahren einfach und kostengünstig realisieren lässt. Darüber hinaus erlaubt das Verfahren eine direkte Erwärmung der Faserverbundstruktur 1, ohne dass es erforderlich ist, z.B. große Presswerkzeuge zu heizen, was das Verfahren sehr energieeffizient und damit kostengünstig im Betrieb macht.

Allerdings ist das Verfahren nur wenig geeignet, um Faserverbundstrukturen in einer geringen Taktzeit zu konsolidieren und gleich weiteren Formgebungsprozessen und/oder Umformprozessen zuzuführen, insbesondere wenn die Konsolidierung direkt nach der Herstellung der Faserverbundstruktur erfolgen und die konsolidierte Faserverbundstruktur nach erfolgter Konsolidierung sofort einem Formgebungsprozess und/oder Umformprozess zugeführt werden soll.

Weiterhin ist das Verfahren nur wenig geeignet, um Faserverbundstrukturen zu konsolidieren, die lokale Verstärkungen aufweisen, beispielsweisen in Bauteilbereichen, an denen später Scharniere angesetzt werden sollen, oder an denen eine Verbindung mit anderen Bauteilen erfolgen soll.

Weiter besteht bei diesem Verfahren die Möglichkeit, dass es beim Schließen von Abdeckung und Unterlage zu Lufteinschlüssen kommt, bzw. dass sich während des Verpressens und Konsolidierens innerhalb der Faserverbundstruktur Lufteinschlüsse bilden, etwa durch das Verdampfen von anhaftender Restfeuchte, und es so zur Bildung von Poren in dem konsolidierten Laminat kommen kann. Zwar wird durch den angewandten Unterdruck für eine gewisse Entlüftung der Faserverbundstruktur gesorgt, da aber die Faserverbundstruktur zwischen der Unterlage und der Abdeckung eingepresst wird, mag es vorkommen, dass ein Absaugen von Lufteinschlüssen oder entstehenden Dampfblasen vor allem in der Mitte der Faserverbundstruktur in einigen Fällen nur unzureichend erfolgt. Infolgedessen können sich vor allem in der Mitte der Faserverbundstruktur Poren bilden, die zu einem optisch unzulänglichen Eindruck der Oberfläche des konsolidierten Laminats und/oder zu einem inhomogenen Laminat führen können.

Aus der DE 38 13 694 A1 offenbart ein Verfahren zum kontinuierlichen, taktweisen Formen von Faserverbundwerkstoffen auf der Basis eines thermoplastischen Matrixmaterials zu dreidimensionalen Formteilen, wobei ein bereits konsolidierter Faserverbundwerkstoff in einer Heizzone erwärmt, in einer Umformzone geformt und einer Kühlzone gekühlt wird und die Zonen mittels einer einer Förderanlage verbunden sind.

Es ist daher eine Aufgabe der Erfindung, ein Verfahren und eine Anlage zum Konsolidieren einer Faserverbundstruktur anzugeben, welche die vorstehenden Nachteile überwinden.

Es ist eine weitere Aufgabe der Erfindung, ein Verfahren und eine Anlage zum Konsolidieren einer Faserverbundstruktur anzugeben, welche eine schnelle Konsolidierung und direkte Weiterverarbeitung der konsolidierten Faserverbundstruktur ermöglicht.

Es ist eine weitere Aufgabe der Erfindung, ein Verfahren und eine Anlage zum Konsolidieren einer Faserverbundstruktur anzugeben, welche auch das Konsolidieren von Faserverbundstrukturen mit lokalen Verstärkungen bei hoher Qualität ermöglichen.

Es ist eine nochmals weitere Aufgabe der Erfindung, ein Verfahren und eine Anlage zum Konsolidieren einer Faserverbundstruktur anzugeben, welche es ermöglichen, eine Faserverbundstruktur bei weitestgehender Vermeidung der Ausbildung von Lufteinschlüssen und/oder Poren zu einem Laminat zu konsolidieren, und es so ermöglicht, ein Laminat mit einer einwandfreien, homogenen Oberfläche auszubilden.

Diese und andere Aufgaben der Erfindung werden gelöst mit einem Verfahren und einer Vorrichtung zum Konsolidieren einer Faserverbundstruktur wie in den Ansprüchen 1 und 11 angegeben. Weitere bevorzugte Ausführungsformen sind in den abhängigen Ansprüchen dargelegt.

Als eine erste Lösung wird ein Verfahren zum Konsolidieren einer Faserverbundstruktur mit zumindest einem thermoplastischen und/oder thermoelastischen Polymer vorgeschlagen, umfassend Anordnen der Faserverbundstruktur zwischen einer plattenförmigen Unterlage und einer plattenförmigen Abdeckung in einer Belade-/Entladestation einer Fördervorrichtung, wobei die Abdeckung durch ein Dichtelement in Bezug auf die Unterlage verlagerbar gegen die Unterlage abgedichtet wird, Erzeugen eines Unterdrucks in dem Zwischenraum zwischen der Unterlage und der Abdeckung, so dass der Umgebungsdruck die Abdeckung gegen die Unterlage drückt und die Faserverbundstruktur zwischen der Abdeckung und der Unterlage geklemmt wird, Erwärmen der Faserverbundstruktur mittels elektromagnetischer Strahlung vorzugsweise zumindest bis in den Bereich der Schmelztemperatur des zumindest einen thermoplastischen und/oder thermoelastischen Polymers in einer Heizstation der Fördervorrichtung, Kühlen der Faserverbundstruktur in einer Kühlstation der Fördervorrichtung, wobei die Kühlung in der Kühlstation über eine in sich geschlossene Flächenkühlung, insbesondere einen Kühltisch, erfolgt und die Flächenkühlung in Kontakt mit der Unterlage und/oder mit der Abdeckung steht; und Entnahme der konsolidierten Faserverbundstruktur von der Unterlage oder Entnahme der mit der konsolidierten Faserverbundstruktur belegten Unterlage aus der Fördervorrichtung.

Dies macht es möglich, Faserverbundstrukturen direkt nach einem Entstehungsprozess zu konsolidieren und nach dem Konsolidieren direkt weiterverarbeiten zu können, wodurch sich insgesamt eine geringe Zykluszeit ergibt. Es wird somit ein Direktprozess in einer kompakten Anlage ermöglicht.

Die Flächenkühlung ermöglicht eine gleichmäßige Kühlung der gesamten konsolidierten Faserverbundstruktur und verhindert somit die Ausbildung von thermischen Spannungen innerhalb der Faserverbundstruktur. Auch lokale Dichteunterschiede können hiermit unterbunden werden. Eine in sich geschlossene Kühlung soll hierbei ein geschlossenes System darstellen, in welchem beispielsweise ein Kühlmittel zirkuliert und dass die Kühlwirkung über die Außenfläche der Flächenkühlung abgibt. Es hat sich insbesondere gezeigt, dass ein Aufsprühen eines Kühlungsmittels Anlagen zur direkten Verarbeitung von Faserverbundstrukturen nicht praktikabel ist, insbesondere in Bezug auf den Anlagentechnischen Aufwand und die zu erreichenden Zykluszeiten.

Bevorzugt wird die konsolidierte Faserverbundstruktur nach der Entnahme aus der Fördervorrichtung einer Presse, insbesondere einer Stanzpresse zugeführt. Die konsolidierte Faserverbundstruktur kann hierdurch in eine endkonturnahe Form gebracht werden und eventuell Ausschnitte können zu einem Zeitpunkt erzeugt werden, in welchem die konsolidierte Faserverbundstruktur stabil, jedoch noch flexibel ausgebildet ist.

Auch kann vorgesehen sein dass nach dem Anordnen der Faserverbundstruktur auf der Unterlage die Unterlage aus der Fördervorrichtung mittels eines Hubtisches angehoben und auf die Abdeckung zubewegt wird und/oder die Abdeckung oberhalb der Fördervorrichtung mittels Halteelementen gehalten und auf die Unterlage zubewegt wird. Durch den Hubtisch wie auch die Halteelemente kann eine präzise Ausrichtung der Unterlage gegenüber der Abdeckung realisiert werden, da die Unterlage mit der Faserverbundstruktur und die Abdeckung von der Fördervorrichtung hierdurch entkoppelt ist und somit die Unterlage zur Abdeckung entsprechend ausrichten kann.

Alternativ oder in Kombination ist es vorgesehen, dass sobald ein Unterdruck im Zwischenraum zwischen Unterlage und Abdeckung aufgebaut ist die Abdeckung aus dem zumindest einen Halteelement gelöst wird und der Hubtisch die Anordnung aus Unterlage, Abdeckung und dazwischen platzierter Faserverbundstruktur in der Fördervorrichtung, bevorzugt in der Belade-/Entladestation ablegt. Durch den Unterdruck im Zwischenraum zwischen Abdeckung und Unterlage werden die Abdeckung und die Unterlage in Ihrer Position zueinander fixiert und die Abdeckung liegt über das Dichtelement auf der Unterlage auf.

In einer bevorzugten Weiterbildung kann während des Verpressens der Faserverbundstruktur eine Erkennung von Blasenbildung ausgeführt werden, wobei im Fall der Blasenbildung der Druck im Zwischenraum temporär erhöht und/oder die Abdeckung angehoben wird, um eine zumindest teilweise Reduzierung der Auflage der Abdeckung, insbesondere eine Reduzierung der Auflage des Teilabschnitts auf der Faserverbundstruktur zu erzielen und so einen lokalen Entlüftungspfad zum Abziehen der Luft oder des Dampfes zu ermöglichen. Die Erkennung von Blasenbildung kann insbesondere erfolgen, indem der Betrag des Unterdrucks in dem Zwischenraum überwacht wird, und/oder indem mittels einer Thermobildkamera die Temperaturverteilung in der Faserverbundstruktur erfasst wird, wobei bei Vorliegen einer im Thermobild erkennbaren lokalen Kaltstelle relativ zu einer heißen Umgebung auf das Vorliegen einer Blase geschlossen wird.

Indem zusätzlich eine Blasenerkennung vorgenommen wird, kann die Zuverlässigkeit der Konsolidierung weiter verbessert und die hohe Qualität und Güte eines zum Laminat verpressten und konsolidierten Faserverbundstruktur sichergestellt werden. Die Abdichtung kann mittels eines Dichtelements, insbesondere einer elastischen Ringdichtung erfolgen.

Es kann vorgesehen sein, dass die Erwärmung der Faserverbundstruktur mittels elektromagnetischer Strahlung vor, gleichzeitig mit oder nach dem Verpressen der Faserverbundstruktur zwischen der Abdeckung und der Unterlage erfolgt.

Eine Kühlung sowohl durch die Unterlage als auch die Abdeckung wird bevorzugt, da dies eine gleichmäßige wie auch schnelle Kühlung der konsolidierten Faserverbundstruktur ermöglicht.

Weiter kann es vorgesehen sein, dass für die Flächenkühlung als ein Kühltisch ausgebildet ist, welcher die Anordnung aus Unterlage, Abdeckung und dazwischen platzierter Faserverbundstruktur aus der Fördervorrichtung anheben kann und einer weitere Flächenkühlung über die Abdeckung zuführen kann.

Alternativ oder in Kombination zeichnet das Verfahren aus, dass die Faserverbundstruktur in der Kühlstation auf eine Temperatur gekühlt wird, welche unterhalb der Schmelztemperatur und oberhalb der Erweichungstemperatur des zumindest einen thermoplastischen und/oder thermoelastischen Polymers liegt, oder welche unterhalb der Erweichungstemperatur des zumindest einen thermoplastischen und/oder thermoelastischen Polymers liegt. Bevorzugt wird die Faserverbundstruktur in der Kühlstation auf eine Temperatur unterhalb 150°C, bevorzugt unterhalb 120°C, besonders bevorzugt unterhalb von 100°C gekühlt wird. Hierdurch wird die konsolidierte Faserverbundstruktur handhabbar und kann weiteren Prozessschritten zugeführt werden. Die ideale Temperatur hängt von den weiteren Prozessschritten wie auch von der Art des Polymers ab.

Bevorzugt ist die Fördervorrichtung als drehbar ausgebildet, insbesondere in der Form eines Drehtisches. Dies ermöglicht eine kompakte Bauweise und kurze Transportstrecken zwischen den einzelnen Stationen der Fördervorrichtung.

Die Abdeckung und/oder die Unterlage sind bevorzugt als eine Glasplatte ausgebildet oder umfassen diese.

Weiter kann es vorgesehen sein, dass die Faserverbundstruktur zumindest einen Bereich einer Erhebung aufweist, wobei für jeden Bereich der Erhebung eine Kavität in der Abdeckung vorgesehen ist, um die entsprechende Erhebung aufzunehmen. Dies macht es möglich auch Faserverbundstrukturen mit Höhensprüngen zu konsolidieren.

Es kann weiter insbesondere vorgesehen sein, dass jede Kavität die jeweils zugeordnete Erhebung seitlich mit einem Spalt umgibt, wobei der Spalt bevorzugt eine Breite zwischen 3 und 15 mm, besonders bevorzugt zwischen 5 und 10 mm aufweist.

Auch kann vorgesehen sein, dass jede Kavität eine Tiefe aufweist, die zwischen dem 0,7-fachen und 1,0-fachen der Höhe der jeweils zugeordneten Erhebung gegenüber der Oberfläche der Faserverbundstruktur in einem nicht erhobenen Bereich beträgt, und/oder jede Kavität eine Tiefe aufweist, die so bemessen ist, den Materialschwund bzw. die Kompaktifizierung des Materials der Faserverbundstruktur während des Konsolidierens zu auszugleichen.

In einer bevorzugten Weiterbildung kann das Verfahren weiter umfassen: Herbeiführen einer Biegung der Abdeckung, so dass die Abdeckung, gegebenenfalls unter zusätzlicher Absenkung der Abdeckung, die Oberfläche der Faserverbundstruktur in einem Teilabschnitt berührt; und weiteres Biegen und/oder Absenken der Abdeckung, bis die Abdeckung die gesamte Oberfläche der Faserverbundstruktur berührt und die Faserverbundstruktur zwischen der Abdeckung und der Unterlage verpresst wird.

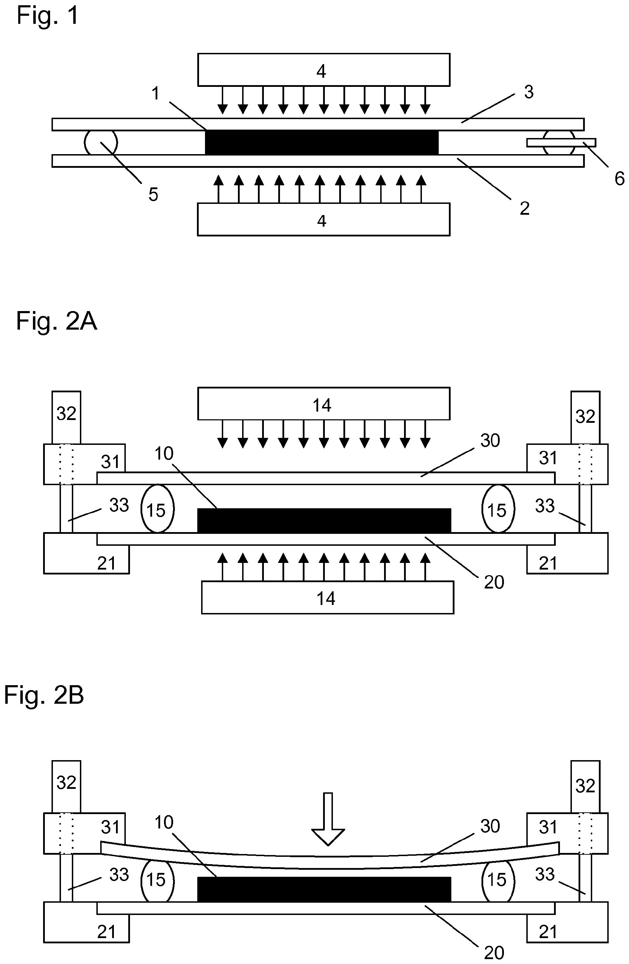

Es erfolgt das Verpressen und Konsolidieren der Faserverbundstruktur daher nicht gleichzeitig über die gesamte Fläche, wie dies etwa beim mit Bezug auf Fig. 1 erläuterten Verfahren geschieht. Vielmehr wird die Faserverbundstruktur mittels der gebogenen Abdeckung ausgehend von einem schmalen Teilbereich sukzessive und kontrolliert nach außen hin verpresst, so dass durch die Verschiebung von Faser- und Polymermaterial, die durch die lokale Einwirkung der von der gebogenen Abdeckung ausgeübten Druckkraft hervorgerufen wird, in der Faserverbundstruktur eingeschlossene Luft oder sich durch die Erwärmung bildende Dämpfe herausgedrückt werden und nach einer nur relativ kurzen Strecke in einen Bereich gelangen, in dem die Abdeckung auf Grund der Biegung derselben noch nicht oder noch nicht so stark auf die Faserverbundstruktur drückt, so dass die eingeschlossene Luft oder sich durch die Erwärmung bildende Dämpfe einfacher aus der Faserverbundstruktur heraus in den Zwischenraum entweichen und über die angeschlossene Vakuumpumpe abgezogen werden können. Dies ermöglicht es, die Faserverbundstruktur weitestgehend ohne oder mit nur wenigen und sehr kleinen Lufteinschlüssen bzw. Poren zu konsolidieren und somit zu einem hochqualitativen Laminat hoher Güte zu formen.

Vorzugsweise wird die Abdeckung anfänglich in einem Abstand über der Faserverbundstruktur positioniert. Weiter bevorzugt kontaktiert die Abdeckung die Faserverbundstruktur erst, nachdem die Faserverbundstruktur bereits vollständig erwärmt wurde, um das Imprägnierpolymer schmelzflüssig zu machen.

Bevorzugt ist vorgesehen, dass die Abdeckung an zumindest zwei gegenüberliegenden Seiten jeweils ein Tragrahmenelement aufweist, und/oder die Unterlage an zumindest zwei gegenüberliegenden Seiten jeweils ein Tragrahmenelement aufweist.

Es kann vorgesehen sein, dass im Bereich von zumindest zwei gegenüberliegenden Seiten der Abdeckung jeweils eine Abstützeinrichtung angeordnet ist, welche die Abdeckung gegenüber der Unterlage derart abstützt, um einer durch den Unterdruck im Zwischenbereich verursachten, in Richtung nach unten auf die Abdeckung wirkenden Kraft entgegenzuwirken und so das Biegen der Abdeckung herbeizuführen.

Die Abstützeinrichtungen können jeweils als ein oder mehrere Aktuatoren, insbesondere als Pneumatikaktuatoren, Hydraulikaktuatoren oder elektromotorische Aktuatoren ausgebildet sein. Die Verwendung von Aktuatoren, welche insbesondere von einer Steuerung angesteuert werden können, erlauben eine wohlkontrollierte und gesteuerte Positionierung und/oder Biegung der Abdeckung. Dies kann vorteilhaft ergänzt werden, indem die Vakuumpumpe ebenfalls von der Steuerung gesteuert wird, um so einen wohldefinierten und gewünschten Druckzustand, bzw. einen Druckverlauf über die Zeit in dem Zwischenraum herbeizuführen. Besonders bevorzugt kann dabei auch eine Überwachung oder ein Messen des Drucks im Zwischenraum erfolgen, so dass gegebenenfalls die Steuerung nachjustieren oder nachregeln kann, und/oder um Überwachungsfunktionen auszulösen.

Alternativ können die Abstützeinrichtungen jeweils als Federelemente ausgebildet sein. Auf diese Weise kann eine sehr einfache und kostengünstige Ausführung verwirklicht werden, die gleichzeitig sehr gute Eigenschaften aufweist. Insbesondere ist es möglich, durch Auswählen bzw. Verwirklichen von gewünschten geeigneten Federcharakteristiken, wie beispielsweise der Verwendung von degressiven Federcharakteristiken, den zeitlichen Verlauf der Biegung der Abdeckung und des Konsolidierens einem gewünschten Verlauf entsprechend einzustellen und so ein gewünschtes und maßgeschneidertes Konsolidieren und Verpressen zu verwirklichen. Auch wenn die Federelemente allein passiv wirkende Elemente darstellen, besteht weiterhin die Möglichkeit des aktiven Eingriffs, insbesondere der Steuerung und/oder Regelung des Verfahrensablaufs, indem beispielsweise eine Steuerung den Betrieb der Vakuumpumpe zum Erzeugen des Unterdrucks in dem Zwischenraum entsprechend steuert und so den herrschenden (Unter-) Druck entsprechend anhebt oder senkt, oder einen gewünschten zeitlichen Druckverlauf anweist, wobei der herrschende Unterdruck im Zusammenspiel mit den Federcharakteristiken der Federelemente wiederum zu einer entsprechenden Ausprägung der Biegung der Abdeckung führt.

Weiter alternativ können die Abstützeinrichtungen jeweils als Distanzelemente ausgebildet sein, welche eine Höhe aufweisen, die größer als eine Zieldicke der Faserverbundstruktur nach Konsolidierung sein.

Mit dieser Ausgestaltung wird eine einfachstmögliche und somit konstruktiv und kostenmäßig am wenigsten aufwändige Lösung verwirklicht, die dennoch gute Ergebnisse erzielt. Die Distanzelemente können zwischen der Faserverbundstruktur und dem Dichtelement angeordnet sein, sind aber bevorzugt außerhalb des Dichtelements angeordnet, wodurch sich eine bessere Handhabung der Distanzelemente ergibt und diese auf die jeweiligen Erfordernisse ohne Probleme ausgetauscht werden können.

Als eine nochmals weitere Lösung wird eine Anlage zum Konsolidieren einer Faserverbundstruktur angegeben, wobei die Anlage eine Fördervorrichtung umfassend eine Belade-/Entladestation, eine Heizstation und eine Kühlstation umfasst und die Anlage derart eingerichtet ist, in der Belade-/Entladestation die Faserverbundstruktur auf eine Unterlage abzulegen oder eine Unterlage mit einer Faserverbundstruktur in die Anlage einzubringen, und eine Abdeckung über der Unterlage zu positionieren, und mittels einer Vakuumpumpe einen Unterdruck in dem Zwischenraum zwischen der Abdeckung und der Unterlage zu erzeugen, weiter die Unterlage und die Abdeckung mit der dazwischen platzierten Faserverbundstruktur zur Heizstation zu bewegen, in der Heizstation die Faserverbundstruktur mittels der zumindest einen Strahlungsquelle vorzugsweise zumindest bis in den Bereich der Schmelztemperatur des zumindest einen thermoplastischen und/oder thermoelastischen Polymers zu erwärmen, und mittels der Vakuumpumpe den Unterdruck in dem Zwischenraum zum Verpressen der Faserverbundstruktur zwischen der Abdeckung und der Unterlage aufrecht zu erhalten oder noch weiter zu erhöhen, nach erfolgter Verpressung, die Unterlage und die Abdeckung mit der dazwischen platzierten verpressten Faserverbundstruktur zur Kühlstation zu bewegen und in der Kühlstation die Anordnung aus Unterlage, Abdeckung und der dazwischen platzierten Faserverbundstruktur zu kühlen, wobei in der Kühlstation eine in sich geschlossene Flächenkühlung, bevorzugt ein Kühltisch, angeordnet ist, mittels welcher die Anordnung aus Unterlage, Abdeckung und dazwischen platzierter Faserverbundstruktur aus der Fördervorrichtung heraushebbar und ablegbar und eine Kühlwirkung durch die Unterlage erzielbar ist und/oder wobei in der Kühlstation eine in sich geschlossene Flächenkühlung, bevorzugt ein Kühltisch, angeordnet ist, welche auf die Abdeckung zubewegbar und eine Kühlwirkung durch die Abdeckung (30, 30') erzielbar ist; nach erfolgter Abkühlung, die Unterlage und die Abdeckung mit der dazwischen platzierten Faserverbundstruktur zur Belade-/Entladestation zu bewegen, und in der Belade-/Entladestation die Abdeckung mittels Halteelementen von der Unterlage abzuheben zur Entnahme der konsolidierten Faserverbundstruktur (von der Unterlage oder zur Entnahme der mit der konsolidierten Faserverbundstruktur belegten Unterlage.

Bevorzugt umfasst die Anlage weiter eine Presse, insbesondere eine Stanzpresse. Dies ermöglicht eine endkonturnahe Formgebung und die Ausbildung beispielsweise von Ausschnitten in der konsolidierten Faserverbundstruktur direkt im Anschluss an die Konsolidierung mit der noch gegenüber der Raumtemperatur warmen Faserverbundstruktur.

Weiter kann es vorgesehen sein, dass die Fördervorrichtung als Drehtisch ausgebildet ist.

Bevorzugt ist in der Belade-/Entladestation ein Hubtisch angeordnet, um die Unterlage mit der darauf abgelegten Faserverbundstruktur von der Fördervorrichtung weg und zu ihr hin zu bewegen. Alternativ oder in Kombination ist ein Halteelement angeordnet, um die Abdeckung oberhalb der Fördervorrichtung zu Halten und auf die Unterlage hin und von ihr weg zu bewegen. Dies erlaubt eine präzise Ausrichtung der Unterlage zur Abdeckung.

Die Anlage kann bevorzugt weiter einen Sensor zur Erfassung des Drucks in dem Zwischenraum und/oder eine Thermobildkamera zur Erfassung eines Bildes der Temperaturverteilung in der Faserverbundstruktur umfassen, wobei die Anlage bevorzugt weiter eine Steuereinheit umfasst, die eingerichtet ist, bei Erkennen eines plötzlichen Druckanstiegs bzw. einer im Thermobild erkennbaren lokalen Kaltstelle relativ zu einer heißen Umgebung zu bestimmen, dass eine Blase vorliegt, und bei Vorliegen einer Blase die Vakuumpumpe und/oder die als Aktuatoren ausgebildeten Abstützeinrichtungen anzuweisen, den Druck im Zwischenraum temporär zu erhöhen und/oder die Abdeckung anzuheben, um eine zumindest teilweise Reduzierung der Auflage der Abdeckung auf der Faserverbundstruktur zu erzielen und so einen lokalen Entlüftungspfad zum Abziehen der Luft oder des Dampfes zu ermöglichen.

Vorzugsweise ist die Abdeckung und/oder die Unterlage als eine Glasplatte ausgebildet ist oder diese umfasst.

Die genannte Anlage ist bevorzugt so eingerichtet, die hierin genannten Verfahren auszuführen.

Weiter wird eine Vorrichtung zum Konsolidieren einer Faserverbundstruktur mit zumindest einem thermoplastischen und/oder thermoelastischen Polymer angegeben, umfassend eine plattenförmige Unterlage; eine plattenförmige Abdeckung; ein Dichtelement zur verlagerbaren Abdichtung der Abdeckung in Bezug auf die Unterlage; zumindest eine Strahlungsquelle zur Erzeugung von elektromagnetischer Strahlung zum Erwärmen der Faserverbundstruktur mittels elektromagnetischer Strahlung vorzugsweise zumindest bis in den Bereich der Schmelztemperatur des zumindest einen thermoplastischen und/oder thermoelastischen Polymers; und eine Vakuumpumpe zum Erzeugen eines Unterdrucks in dem Zwischenraum zwischen der Unterlage und der Abdeckung, so dass der Umgebungsdruck die Abdeckung gegen die Unterlage drückt und die Faserverbundstruktur zwischen der Abdeckung und der Unterlage verpresst wird, wobei die Faserverbundstruktur zumindest einen Bereich einer Erhebung aufweist, wobei für jeden Bereich einer Erhebung eine Kavität in der Abdeckung vorgesehen ist, um die entsprechende Erhebung aufzunehmen.

Es kann weiter insbesondere vorgesehen sein, dass jede Kavität die jeweils zugeordnete Erhebung seitlich mit einem Spalt umgibt, wobei der Spalt bevorzugt eine Breite zwischen 3 und 15 mm, besonders bevorzugt zwischen 5 und 10 mm aufweist. Auch kann vorgesehen sein, dass jede Kavität eine Tiefe aufweist, die zwischen dem 0,7-fachen und 1,0-fachen der Höhe der jeweils zugeordneten Erhebung gegenüber der Oberfläche der Faserverbundstruktur in einem nicht erhobenen Bereich beträgt, und/oder jede Kavität eine Tiefe aufweist, die so bemessen ist, den Materialschwund bzw. die Kompaktifizierung des Materials der Faserverbundstruktur während des Konsolidierens zu auszugleichen.

Vorzugsweise weist die Vorrichtung weiter im Bereich von zumindest zwei gegenüberliegenden Seiten der Abdeckung vorgesehene Abstützeinrichtungen umfasst, welche eingerichtet sind, die Abdeckung gegenüber der Unterlage derart abstützen, um einer durch den Unterdruck im Zwischenbereich verursachten, in Richtung nach unten auf die Abdeckung wirkenden Kraft entgegenzuwirken und so eine Biegung der Abdeckung zu bewirken.

Vorzugsweise sind die Abstützeinrichtungen jeweils als ein oder mehrere Aktuatoren, insbesondere als Pneumatikaktuatoren, Hydraulikaktuatoren oder elektromotorische Aktuatoren oder als Federelemente ausgebildet, oder als Distanzelemente ausgebildet, welche eine Höhe aufweisen, die größer als eine Zieldicke der Faserverbundstruktur nach Konsolidierung ist.

Die Erfindung wird hiernach mit Bezug auf die Zeichnungen beschrieben:
- Fig. 1: zeigt ein Verfahren zum Konsolidieren einer Faserverbundstruktur gemäß dem Stand der Technik:
- Fig. 2A bis 2E: zeigen ein Verfahren zum Konsolidieren einer Faserverbundstruktur gemäß einer ersten bevorzugten Ausführungsform;
- Fig. 3A bis 3C: zeigen ein Verfahren zum Konsolidieren einer Faserverbundstruktur gemäß einer zweiten bevorzugten Ausführungsform;
- Fig. 4A und 4B: zeigen ein Verfahren zum Konsolidieren einer Faserverbundstruktur gemäß einer dritten bevorzugten Ausführungsform;
- Fig. 5A bis 5E: erläutern schematisch ein Verfahren zum Konsolidieren einer Faserverbundstruktur mit einer Erhebung, gemäß einer weiteren bevorzugten Ausführungsform; und
- Fig. 6A bis 6B: erläutern schematisch die Anordnung der Stationen auf einer Fördervorrichtung; und
- Fig. 7A und 7B: erläutern schematisch ein Verfahren zum Konsolidieren einer Faserverbundstruktur mit einer Erhebung, gemäß einer weiteren bevorzugten Ausführungsform; und
- Fig. 8: veranschaulicht den Aufbau einer Strahlungsquelle und das Erwärmen einer Faserverbundstruktur.

Mit Bezug auf die Fig. 2A bis 2E wird zunächst ein Verfahren zum Konsolidieren einer Faserverbundstruktur gemäß einer ersten bevorzugten Ausführungsform beschrieben.

Wie in Fig. 2A gezeigt, wird eine mit thermoplastischen oder thermoelastischen Polymeren vorimprägnierten oder mit solchen Polymeren im festen oder gelösten bzw. abgeschiedenen Zustand versetzten Faserverbundstruktur 10 auf einer plattenförmigen Unterlage 20 angeordnet. Unter Vorsehung eines Dichtelements 15, insbesondere einer elastischen Ringdichtung, welche die Faserverbundstruktur 10 seitlich und bevorzugt in einem Abstand umgibt, wird weiter eine plattenförmige Abdeckung 30 über der auf der Unterlage 20 angeordneten Faserverbundstruktur positioniert. Die Unterlage 20 und die Abdeckung 30 sind jeweils aus einem für elektromagnetische Strahlung, insbesondere Infrarotstrahlung, durchlässigen und hitzebeständigen Material gebildet. Besonders bevorzugt sind die Unterlage 20 und die Abdeckung 30 jeweils als Glasplatten ausgebildet. Beispielsweise können die Abdeckung 30 und die Unterlage 20 jeweils als rechteckige Glasplatten mit einer Breite von 500 mm, 1000 mm, 1500 mm, 2000 mm oder mehr, und einer Länge von 1000 mm, 1500 mm, 2000 mm, 2500 mm oder mehr ausgebildet sein. Die Dicke der Glasplatte kann beispielsweise 2 mm, 3 mm, 5 mm oder mehr betragen.

Um zu vermeiden, dass sich die Unterlage 20 auf Grund ihres Eigengewichts nach unten hin durchbiegt, ist bevorzugt vorgesehen, dass die Unterlage 20 von unten her gestützt wird, beispielsweise indem sie teilweise oder ganzflächig auf eine Tischplatte oder auf eine andere Stützstruktur (nicht dargestellt) aufgelegt wird, welche die Unterlage 20 von unten stützt. Es ist ebenfalls denkbar, die Unterlage 20 mit einer größeren Dicke auszubilden als die Abdeckung 30, beispielsweise für die Unterlage 20 eine Glasplatte mit 5 mm oder 8 mm zu verwenden, während für die Abdeckung 30 eine Glasplatte mit 2 mm oder 3 mm verwendet wird. In diesem Fall wird die Unterlage 20 eine inhärent größere Steifigkeit aufweisen und dementsprechend weniger zum Durchbiegen neigen als die Abdeckung 30.

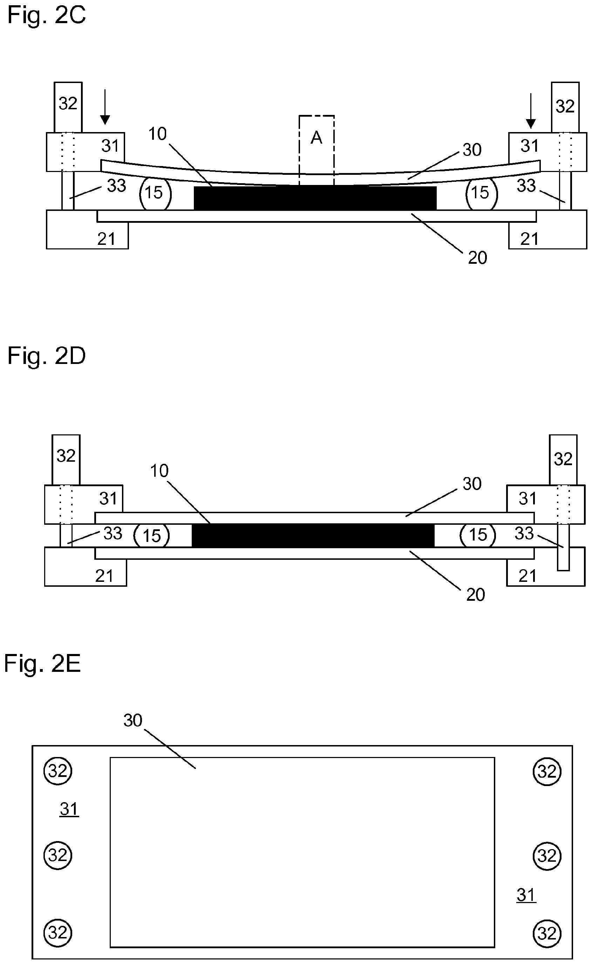

Um eine einfachere Handhabung der Abdeckung 30 und der Unterlage 20 zu bieten, können diese jeweils an einem Tragrahmen befestigt sein. Der Tragrahmen kann einteilig oder mehrteilig ausgeführt sein, und kann die Abdeckung 30 und die Unterlage 20 an ihren Seitenkanten vollständig oder teilweise umfassen. Entsprechend zeigt die Fig. 2A beispielhaft, dass an der Abdeckung 30 und der Unterlage 20 jeweils zwei Tragrahmenelementen 21 bzw. 31 angeordnet sind. Ein Beispiel eines die Abdeckung 30 vollständig umfassenden bzw. umlaufenden Tragrahmens aus Tragrahmenelementen 31 ist in der Fig. 2E zu sehen, welche eine Draufsicht von oben auf eine beispielhafte Abdeckung 30 zeigt. Zur Handhabung der Abdeckung 30, insbesondere zum Positionieren der Abdeckung 30 über der Unterlage 20 können an den Tragrahmenelementen 31 seitliche Vorsprünge, Ausnehmungen oder dergleichen (nicht dargestellt) vorgesehen sein, welche es ermöglichen, dass entsprechende Haken oder andere Halteelemente (nicht dargestellt) den Tragrahmen 31, und somit die Abdeckung 30, in Eingriff nehmen können. Wird für die Abdeckung 30 und/oder die Unterlage 20 jeweils eine Glasplatte verwendet, kann die Glasplatte beispielsweise durch Verkleben mit den entsprechenden Tragrahmenelementen 21, 31 fest verbunden sein. Andere Arten der Befestigung, wie Verschrauben, oder auch Klemmen in einer Nut, die in einem Tragrahmenelement 21, 31 vorgesehen ist, und welche die Glasplatte beidseitig umfasst und klemmt, sind ebenfalls denkbar.

Wieder mit Bezug auf Fig. 2A sind an den an der Abdeckung 30 angeordneten Tragrahmenelementen 31 Aktuatoren 32, insbesondere Pneumatikaktuatoren angeordnet, die mit einem voreingestellten Druck angesteuert werden können, um einen jeweiligen Zylinder 33 bis zu einer vordefinierten Hubgrenze auszufahren. Über die Zylinder 33, welche sich auf den an der Unterlage 20 angeordneten Tragrahmenelementen 21 abstützen, können die Aktuatoren 32, insbesondere die Pneumatikaktuatoren so die an der Abdeckung 30 angeordneten Tragrahmenelementen 31 in einer vorgegebenen Höhe über den an der Unterlage 20 angeordneten Tragrahmenelementen 21 positionieren und halten. Die Aktuatoren 32 mit den Zylindern 33 können daher als eine Abstützungseinrichtung angesehen werden, welche die Abdeckung 30 gegenüber der Unterlage 20 abstützt. Die Kraft aller Aktuatoren 32, insbesondere der Pneumatikaktuatoren ist dabei größer als die Eigengewicht der Abdeckung 30 und den Tragrahmenelementen 31 ausgeübte Gewichtskraft. Auf diese Weise kann durch Beaufschlagen der Pneumatikaktuatoren mit dem voreingestellten Druck die Abdeckung 30 in einer vordefinierten Position über der Unterlage 20 und der auf der Unterlage 20 angeordneten Faserverbundstruktur 10 gehalten und/oder positioniert werden.

In dieser Position kann vorteilhaft vorgesehen sein, dass sich die Abdeckung 30 in einer Höhe von 2 bis 20 mm über einer Zieldicke bei abgeschlossener Konsolidierung befindet, und/oder sich die Abdeckung 30 in einer Höhe von wenigstens 0,1 mm, bevorzugt wenigstens 1 mm, weiter bevorzugt wenigstens 3 mm und besonders bevorzugt wenigstens 5 mm über der Oberfläche der Faserverbundstruktur 10 befindet. Hierbei ist zu berücksichtigen, dass die Abdeckung 30 in dieser Position auf Grund ihres Eigengewichts und dem nur seitlichen Halten durch die Tragrahmenelemente 31 eine Eigenbiegung erfahren kann. Das Ausmaß dieser Eigenbiegung wird wesentlich bestimmt durch die Auswahl des Materials der Abdeckung 30, insbesondere dessen Steifigkeit und spezifischem Gewicht, sowie der Dicke, der Breite und der Länge der Abdeckung 30. Besonders bevorzugt werden das Material und die Dicke der Abdeckung 30 so gewählt, dass die Eigenbiegung in einem Bereich zwischen 2 und 20 mm, bevorzugt in einem Bereich zwischen 3 und 15 mm, besonders bevorzugt in einem Bereich zwischen 5 und 10 mm liegt. Entsprechend sind die genannten Höhenangaben in diesem Fall als Höhenangaben in Bezug auf den tiefsten Punkt der unteren Oberfläche der Abdeckung 30 zu verstehen.

In der Fig. 2A sind weiter Strahlungsquellen 14 dargestellt, die oberhalb der Abdeckung 30 und unterhalb der Unterlage 20 angeordnet sind, und die eingerichtet sind, elektromagnetische Strahlung zur Erwärmung der Faserverbundstruktur 10 abzugeben. Alternativ ist es ebenso möglich, nur eine Strahlungsquelle 14 oberhalb der Abdeckung 30 oder unterhalb der Unterlage 20 anzuordnen. Die Strahlungsquellen 14 sind bevorzugt als Infrarotlichtquellen ausgeführt. Die unterhalb der Unterlage 20 angeordnete Strahlungsquelle 14 kann optional auch in die Stützstruktur (nicht dargestellt) für die Unterlage 20 angeordnet sein. Vorzugsweise sind die Strahlungsquellen 14 als Flächenstrahler ausgebildet, welche die Abdeckung 30 und/oder die Unterlage 20 im Wesentlichen ganzflächig und mit im Wesentlicher gleicher flächenbezogener Strahlungsdichte bestrahlen. Es sei bemerkt, dass in den folgenden Figuren 2B bis 2D die Strahlungsquellen 14 der Klarheit der Darstellung halber nicht gezeigt sind.

Mit Hilfe einer Pumpe oder dergleichen (nicht dargestellt) wird dann der von der Abdeckung 30, der Unterlage 20 und dem Dichtelement 15 abgedichtete Zwischenraum evakuiert, so dass sich ein Unterdruck in dem Zwischenraum einstellt. Auf Grund des sich an der Abdeckung 30 einstellenden Druckunterschieds zwischen Umgebungsdruck, einerseits, und Unterruck im Zwischenraum, andererseits, stellt sich eine Druckkraft auf die Abdeckung 30 ein, wie durch den Pfeil in Fig. 2B dargestellt. Da die Abdeckung 30 an den seitlichen Rändern (hier beispielsweise die Ränder in Längsrichtung der Abdeckung 30, 30') durch die Tragrahmenelemente 31 gehalten werden, und diese mittels des Aktuatoren 32 und der Zylinder 33 in der Höhe in Position gehalten werden, führt die auf die Abdeckung 30 ausgeübte Druckkraft, zusammen mit dem Eigengewicht der Abdeckung 30, zu einer Biegung der Abdeckung 30, so dass sich die Abdeckung nach unten hin wölbt, wie in Fig. 2B ebenfalls schematisch dargestellt.

Mit zunehmendem Unterdruck wird sich die auf die Abdeckung 30 ausgeübte Kraft zunehmend größer, so dass sich die Abdeckung 30 zunehmend stärker durchbiegen und sich in der Mitte zuerst auf der Faserverbundstruktur 10 auflegen wird. Mit anderen Worten berührt die Abdeckung 30 die Faserverbundstruktur 10 nur in einem relativ kleinen Teilabschnitt A der Oberfläche der Faserverbundstruktur 10, wie in Fig. 2C schematisch dargestellt. Mit zunehmendem Unterdruck vergrößert sich der Teilabschnitt A und dessen Grenzen wandern allmählich nach außen.

Die Abdeckung 30 drückt somit in einem zunehmend größeren Bereich auf die Faserverbundstruktur 10, welche von den Strahlungsquellen 14 vorzugsweise soweit erwärmt wurde, dass die thermoplastischen oder thermoelastischen Polymere bis in den Kern der Faserverbundstruktur 10 hinein schmelzflüssig geworden sind.

Sobald die Summe aus der vom Eigengewicht der Abdeckung 30 und den Tragrahmenelementen 31 (sowie gegebenenfalls an der Abdeckung 30 weiterer vorgesehener Tragrahmenelemente 31 und/oder anderer Elemente) hervorgerufenen Gewichtskraft und der auf Grund des Unterdrucks auf die Abdeckung 30 ausgeübte Kraft, abzüglich der über den Teilabschnitt A in die Faserverbundstruktur 10 eingeleiteten Druckkraft, einen vorgegebenen Betrag überschreitet, insbesondere den Betrag der maximalen Hubkraft der Aktuatoren 32, insbesondere der Pneumatikaktuatoren, öffnen an den Aktuatoren 32 vorgesehene Druckbegrenzungen. Infolgedessen können sich die Tragrahmenelemente 31 absenken, wie durch die Pfeile in der Fig. 2C versinnbildlicht, und die Abdeckung 30 schließt vollständig gegen die Unterlage 20 bis zur vollständigen Auflage der Abdeckung 30 auf der Faserverbundstruktur 10, wie in der Fig. 2D dargestellt. Die Tragrahmenelemente 21 und 31 können dabei so ausgebildet und bemessen sein, dass sie einen Anschlag definieren, welcher den Abstand der Unterlage 20 und der Abdeckung 30 zueinander bei vollständigem Schließen definiert, mithin die Zieldicke der zu konsolidierenden Faserverbundstruktur 10 definiert. Bevorzugt ist jedoch, dass die Tragrahmenelemente 21 und 31 jeweils mit den entsprechenden Oberflächen der Abdeckung 30 und der Unterlage 20 flüchtig ausgebildet sind, und dass ein die Verpressung begrenzender, die Zieldicke der Faserverbundstruktur 10 definierender Anschlag auf andere Weise vorgesehen wird. So kann beispielsweise die minimale Hubgrenze der Aktuatoren 32, insbesondere der Pneumatikaktuatoren als Anschlag genutzt werden, wobei die Aktuatoren 32 so angeordnet und relativ zu den Tragrahmenelementen 31 positioniert befestigt werden, dass die durch die minimale Hubgrenze der Aktuatoren 32 definierte Lage der gewünschten Zieldicke der zu verpressenden Faserverbundstruktur 10 entspricht. Alternativ kann auch ein separater Anschlag vorgesehen sein, wie etwa ein Anschlagstück, das zwischen den Tragrahmenelementen 21, 31 und/oder zwischen der Unterlage 20 und der Abdeckung 30 angeordnet wird, und das mit einer Dicke bemessen ist, die der Zieldicke der zu verpressenden Faserverbundstruktur 10 entspricht.

Das Verpressen und Konsolidieren der Faserverbundstruktur 10 erfolgt daher nicht gleichzeitig über die gesamte Fläche, wie dies etwa beim mit Bezug auf Fig. 1 erläuterten Verfahren geschieht. Vielmehr wird die Faserverbundstruktur 10 mittels der gebogenen Abdeckung 30 ausgehend von einem schmalen Teilabschnitt A sukzessive und kontrolliert nach außen hin verpresst, so dass durch die Verschiebung von Faser- und Polymermaterial, die durch die lokale Einwirkung der von der gebogenen Abdeckung 30 ausgeübten Druckkraft hervorgerufen wird, in der Faserverbundstruktur 10 eingeschlossene Luft oder sich durch die Erwärmung bildende Dämpfe herausgedrückt werden und nach einer nur relativ kurzen Strecke in einen Bereich gelangen, in dem die Abdeckung 30 auf Grund der Biegung derselben noch nicht oder noch nicht so stark auf die Faserverbundstruktur 10 drückt, so dass die eingeschlossene Luft oder sich durch die Erwärmung bildende Dämpfe einfacher aus der Faserverbundstruktur 10 heraus in den Zwischenraum entweichen und über die angeschlossene Vakuumpumpe abgezogen werden können. Dies ermöglicht es, die Faserverbundstruktur 10 weitestgehend ohne Bildung von Lufteinschlüssen oder mit nur sehr kleinen Lufteinschlüssen bzw. Poren zu konsolidieren und somit zu einem hochqualitativen Laminat hoher Güte zu formen.

Es ist weiterhin auch denkbar, dass während des Verpressens der Faserverbundstruktur eine Erkennung von Blasenbildung ausgeführt wird. Beispielsweise kann mit einem Drucksensor der im Zwischenraum herrschende (Unter-) Druck gemessen und von der Steuereinheit ausgewertet werden. Wird dabei ein rascher Druckanstieg gemessen, kann die Steuereinheit dies als die Bildung einer Blase, beispielsweise durch Verdampfen von Flüssigkeit, bewerten. Alternativ oder ergänzend kann auch vorgesehen sein, die Oberfläche der Faserverbundstruktur 10 mit Hilfe einer Thermokamera in Form eines Thermobilds zu erfassen und auszuwerten. Die Steuereinheit kann dabei auf das Vorkommen von lokalen Heißstellen oder lokalen Kaltstellen im Thermobild achten. Eine lokale Heißstelle, das heißt, ein Ort, an dem die im Thermobild abgebildete Temperatur der Faserverbundstruktur 10 deutlich höher ist als die Temperatur in umgebenden Bereichen kann beispielsweise auf das Vorhandensein von Fremdkörpern hindeuten, die sich unter Einfluss der elektromagnetischen Strahlung schneller und höher aufheizen, als das Imprägnierpolymer. Umgekehrt kann eine lokale Kaltstelle, das heißt, ein Ort, an dem das Thermobild eine deutlich geringere Temperatur anzeigt als für umgebende Orte, auf eine Luft- oder Dampfblase hindeuten. Dies liegt darin, dass im Fall des Vorliegens einer Blase durch die Blase Polymer- und Fasermaterial verdrängt wird. Da heißes Polymer- und Fasermaterial mehr Infrarotstrahlung emittiert, die von der Thermobildkamera erfasst wird, als eine Dampf- oder Luftblase (selbst bei selber Temperatur derselben), wird das Thermobild an dieser Stelle daher dunkler erscheinen.

Wenn die Steuereinheit auf diese Weise eine Blasenbildung erkennt, kann die Steuereinheit veranlassen, dass die Vakuumpumpe gedrosselt wird, so dass der Druck im Zwischenraum steigt und weniger Unterdruck herrscht. Die Abdeckung 30 wird sich daher weniger Biegen und der Teilabschnitt A, in welchem die Abdeckung 30 sich auf der Faserverbundstruktur 10 aufstützt wird schmäler. Gleichzeitig oder alternativ kann die Steuereinheit auch die Aktuatoren 32, insbesondere die Pneumatikaktuatoren ansteuern, die Zylinder 33 weiter auszufahren und so die Abdeckung 30 an den Seiten anzuheben, was ebenfalls den Teilabschnitt A, in welchem die Abdeckung 30 sich auf der Faserverbundstruktur 10 aufstützt, verschmälert. Auf diese Weise kann für eine verbesserte Entlüftung der Faserverbundstruktur 10, insbesondere ein Abziehen der Blasen, gesorgt werden.

Nachdem auf diese Weise die Faserverbundstruktur 10 verpresst und zu einem Laminat, auch aus Tailored Blank bezeichnet, konsolidiert wurde, und nachdem das Laminat ausgekühlt ist, kann die Abdeckung 30 geöffnet werden. Dies kann auf einfache Weise geschehen, indem das Vakuum bzw. der Unterdruck in dem Zwischenraum abgestellt und die Abdeckung 30 abgehoben wird. Es wird jedoch bevorzugt, in der umgekehrten Reihenfolge zu der in den Fig. 2A bis 2D gezeigten Abfolge vorzugehen. So werden bei weiterhin bestehendem Unterdruck im Zwischenraum die Aktuatoren 32, insbesondere die Pneumatikaktuatoren, mit Druckluft beaufschlagt, um die Abdeckung 30 zu biegen. Die Abdeckung 30 wölbt sich daher an den seitlichen Enden nach oben und löst sich lokal von dem konsolidierten Laminat. Anschließend wird der Unterdruck im Zwischenraum sukzessive reduziert, so dass sich die Abdeckung 30 nach und nach vom Laminat löst und sich das Laminat auf diese Weise von der Abdeckung 30 abschält. Dies hat den Vorteil, dass sich das Laminat zuverlässiger und zerstörungsfrei von der Abdeckung 30 trennen lässt.

Während im Vorstehenden insbesondere die Verwendung von Pneumatikaktuatoren als Abstützungseinrichtungen beschrieben wurde, ist dies nicht beschränkend, und es können auch andere Aktuatoren 32 oder Vorrichtungen verwendet werden, um die Abdeckung 30 gegenüber der Unterlage 20 abzustützen. Beispielsweise können als Abstützungseinrichtungen auch Hydraulikaktuatoren, elektromotorische Aktuatoren oder andere Aktuatoren verwendet werden, insbesondere auch Servoaktuatoren, welche unter Steuerung durch eine Steuereinrichtung ein Positionieren der Abdeckung 30 in der Höhe und/oder ein Aufbringen einer vordefinierten Kraft ermöglichen.

Das Verfahren kann bevorzugt in einer Anlage (nicht dargestellt) zum Konsolidieren einer Faserverbundstruktur 10 ausgeführt werden, die eine Belade-/Entladestation, eine Pressstation und eine Kühlstation aufweist.

In der Belade-/Entladestation kann die Unterlage 20 beispielsweise für einen Bediener so zugänglich gemacht werden, dass der Bediener eine Faserverbundstruktur, wie beispielsweise ein im Tapelegeverfahren gelegte Tapestruktur auf die Unterlage 20 platzieren kann. Über eine in der Anlage vorgesehene Halterung, die beispielsweise an dem Tragrahmen bzw. den Tragrahmenelementen 31 der Abdeckung 30 angreifen kann, wird die Abdeckung 30 auf oder über der Unterlage 20 platziert, so dass die Faserverbundstruktur 10 wie vorstehend mit Bezug auf Fig. 2A beschrieben in dem mittels einem Dichtelement 15 abgedichteten Zwischenraum angeordnet ist.

Die Unterlage 20 kann dann, zusammen mit der darauf angeordneten Faserverbundstruktur 10 sowie der ebenso darüber angeordneten Abdeckung 30, zu der Pressstation bewegt werden, in der die Faserverbundstruktur 10 von den Strahlungsquellen 14 bestrahlt und erwärmt wird, beispielsweise auf eine Temperatur im Bereich zwischen 200 und 400 °C, abhängig vom Imprägnierpolymer, bis der Kern der Faserverbundstruktur 10 schmelzflüssig ist. In der Pressstation kann dabei vorgesehen sein, dass ein Hubtisch angeordnet ist, der vorzugsweise mit einer flachen Tischfläche ausgebildet ist, um die Unterlage 20 von einer (nicht dargestellten) Fördereinrichtung, die für den Transport in der Anlage sorgt, abzuheben und so in eine wohldefinierte Position zu verbringen. Anschließend wird das Vakuum im Zwischenraum aufgebaut und die Verpressung wie weiter in den Fig. 2B bis 2D beschrieben ausgeführt.

Nach erfolgter Verpressung wird, vorzugsweise bei weiter angelegtem Vakuum, die Gesamtheit aus Unterlage 20, Abdeckung 30 und dazwischen gepresster Faserverbundstruktur 10 zur Kühlstation bewegt.

In der Kühlstation kann ein Kühltisch vorgesehen sein, auf den die Unterlage 20 abgelegt wird, oder der angehoben werden kann, um in Kontakt mit der Unterlage 20 gebracht zu werden. Ebenfalls kann eine Kühlvorrichtung vorgesehen sein, die von oben her in Kontakt mit der Abdeckung 30 gebracht wird. Alternativ kann der Kühltisch die Unterlage 20 so weit anheben, bis die Abdeckung 30 in Kontakt mit der Kühlvorrichtung gebracht wird. Mit dem Kühltisch und der Kühlvorrichtung werden die Abdeckung 30 und die Unterlage 20, sowie mittelbar die Faserverbundstruktur 10 abgekühlt, beispielsweise bis die Faserverbundstruktur 10 im Kern auf eine Temperatur unter 150 °C, bevorzugt unter 100 °C abgekühlt ist und das Imprägnierpolymer verfestigt.

Anschließend kann die Gesamtheit aus Unterlage 20, Abdeckung 30 und dazwischen gepresster Faserverbundstruktur 10 zur Belade-/Entladestation bewegt werden, in der die Abdeckung 30 abgehoben werden und der Bediener die fertig zum Laminat konsolidierte Faserverbundstruktur entnehmen kann.

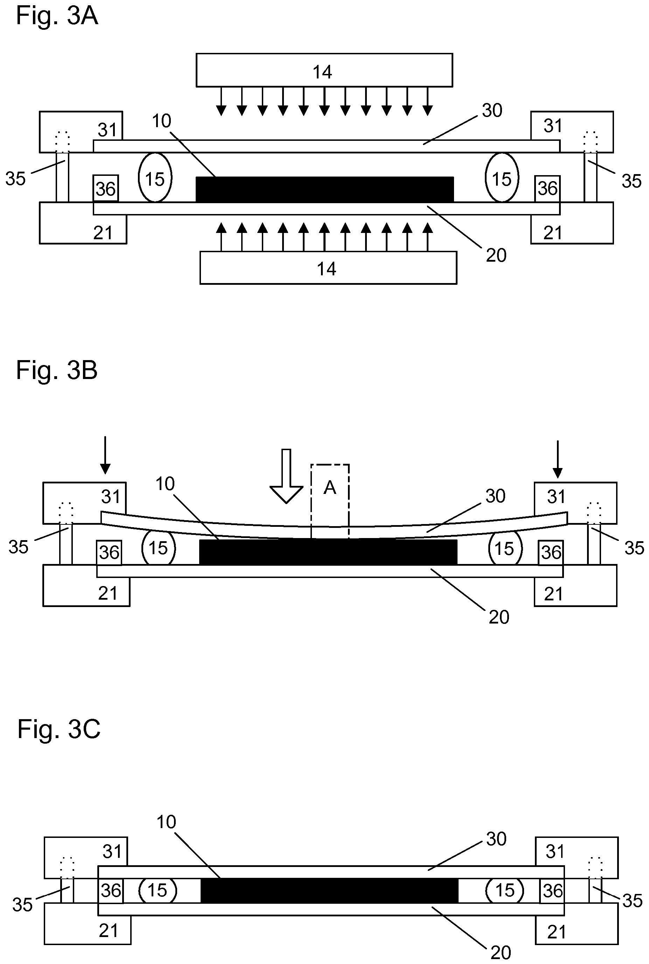

Mit Bezug auf Fig. 3A bis 3C wird nun eine zweite Ausführungsform der Erfindung beschrieben. Die zweite Ausführungsform unterscheidet sich von der ersten Ausführungsform im Wesentlichen dadurch, dass Federelemente 35 anstelle der in der ersten Ausführungsform eingesetzten Aktuatoren 32 vorgesehen sind. Die Federelemente 35 sind bevorzugt in den Tragrahmenelementen 31 der Abdeckung 30 gehaltert und stützen auf Grund der inhärenten Federkraft die Abdeckung 30 gegenüber der Unterlage 20 bzw. den Tragrahmenelementen 21 der Unterlage 20 ab. Die Federelemente 35 können als einfache Federn ausgeführt werden. Bevorzugt wird jedoch, dass die Federelemente 35 mit einer degressiven Federcharakteristik ausgeführt werden. Damit kann erreicht werden, dass bei einer anfänglichen Belastung der Federelemente 35, hier in Folge des zunehmenden Unterdrucks im Zwischenraum, zunächst eine nur geringe Kompression der Federelemente 35 erfolgt, so dass wie in Fig. 3B gezeigt die Abdeckung 30 wiederum eine Biegung erfährt, welche die Abdeckung 30 in dem schmalen Teilbereich A zur Auflage auf und Abstützung gegen die Faserverbundstruktur 10 treten lässt. Mit zunehmendem Unterdruck, und damit zunehmender Belastung der Federelemente 35, gelangen die Federelemente 35 in den Bereich flacherer Steigung der degressiven Federcharakteristik, so dass die Federelemente 35 eine zunehmend größere Kompression erfahren und sich dementsprechend die seitlichen Enden der Abdeckung 30 zunehmend absenken. Der Teilabschnitt A, in dem die Abdeckung 30 sich auf der Faserverbundstruktur 10 abstützt, weitet sich daher zunehmend in der Breite, bis die Abdeckung 30 schließlich ganzflächig in Auflage auf die Faserverbundstruktur 10 kommt und diese verpresst, wie in Fig. 3C gezeigt. Auch hier kann in bevorzugter Weise wieder vorgesehen sein, dass eine Steuereinheit die Vakuumpumpe so ansteuert, dass ein gewünschter zeitlicher Verlauf des (Unter-) Drucks in dem Zwischenraum eingestellt wird, um so unter Berücksichtigung der Federcharakteristik der Federelemente 35 einen gewünschten Verlauf der Biegung der Abdeckung 30, und damit einen gewünschten Verlauf des Verpressens zu steuern und/oder zu regeln.

Um eine übermäßige Kompression der Faserverbundstruktur 10 zu vermeiden, kann, wie in den Fig. 3A bis 3C weiter gezeigt, bevorzugt vorgesehen sein, Anschlagstücke 36 zwischen der Abdeckung 30 und der Unterlage 20 und/oder zwischen den entsprechenden Tragrahmenelementen 31, 21 vorzusehen. Die Anschlagstücke 36 sind in ihrer Höhe entsprechend der Zieldicke der konsolidierten Faserverbundstruktur 10 bemessen. Die Anschlagstücke 36 können beispielsweise aus einem Metall gefertigt sein. Bevorzugt sind die Anschlagstücke 36 jedoch aus einem temperaturfesten Kunststoffmaterial, insbesondere mit geringer spezifischer Wärmekapazität ausgebildet. Dies hat den Vorteil, dass diese Anschlagstücke 36 sich beim Abkühlen der Faserverbundstruktur 10 ebenfalls rasch abkühlen und es nicht zu einem Effekt kommt, dass die Anschlagstücke 36 über den Kühlprozess hinaus heiß bleiben und bei einem nächsten Einbringen einer Faserverbundstruktur 10 diese vorzeitig und unerwünscht lokal erhitzt, was zu einer ungleichmäßigen Verpressung und Konsolidierung führen könnte. Die Anschlagsstücke 36 können zwischen der Faserverbundstruktur 10 und dem Dichtelement 15 angeordnet sein. Alternativ und bevorzugt können diese Anschlagsstücke auch nach bzw. hinter dem Dichtelement 15 angeordnet sein, um flexibel und schnell auf eine geänderte Zieldicke der Faserverbundstruktur einzugehen ohne hierbei auf das Dichtelement 15 besondere Acht zu geben, da dies am seinem Ort verbleiben kann.

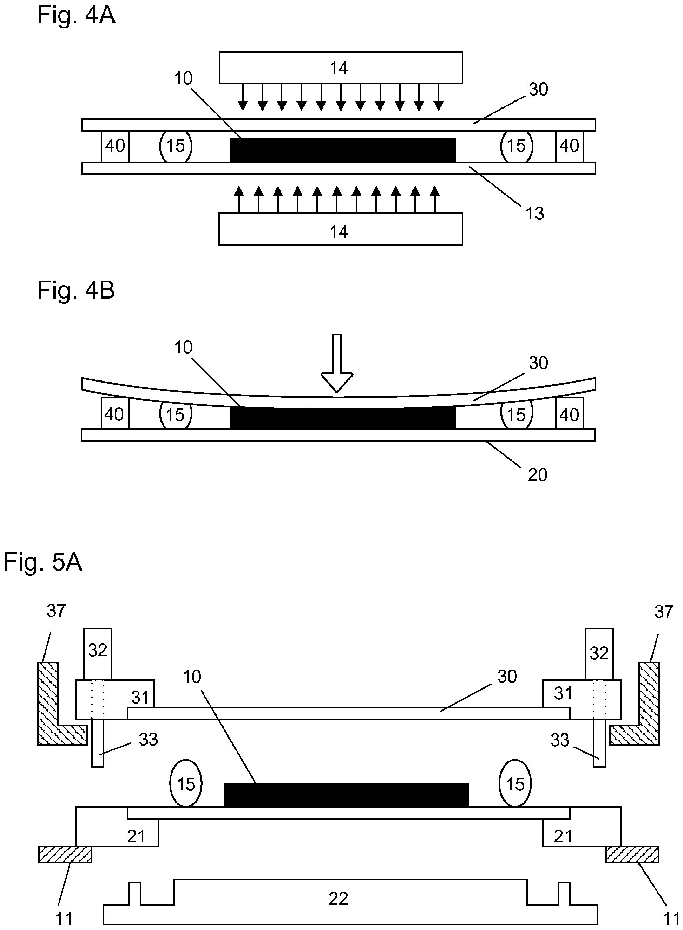

Eine dritte Ausführungsform der Erfindung ist in den Fig. 4A und 4B beschrieben. Wie gezeigt, sind in dieser Ausführungsform Distanzstücke 40 vorgesehen, die zwischen der Unterlage 20 und der Abdeckung 30 und/oder optionalen entsprechenden Tragrahmenelementen (in Fig. 4A und 4B nicht dargestellt) angeordnet werden. Die Distanzstücke 40 können beispielsweise fest mit der Unterlage 20 verbunden sein. Die Distanzstücke 40 haben eine Höhe, die der Zieldicke der zu konsolidierenden Faserverbundstruktur 10 entspricht, zusätzlich mit einem kleinen Übermaß, bevorzugt im Bereich zwischen 0,1 und 0,5 mm. Die Distanzstücke 40 können ebenfalls aus Metall oder bevorzugt aus einem temperaturbeständigen Kunststoffmaterial insbesondere mit geringer spezifischer Wärmekapazität ausgebildet sein. Die Distanzstücke 40 sind bevorzugt in einem Abstand zwischen 20 und 200 mm von dem Außenrand der Faserverbundstruktur 10 angeordnet.

Wie in den Fig. 4A und 4B gezeigt, haben die Distanzstücke 40 ebenfalls die Wirkung, die Abdeckung 30 abzustützen, so dass es unter der Einwirkung des Unterdrucks in dem Zwischenraum wiederum zu einer Biegung der Abdeckung 30 kommt.

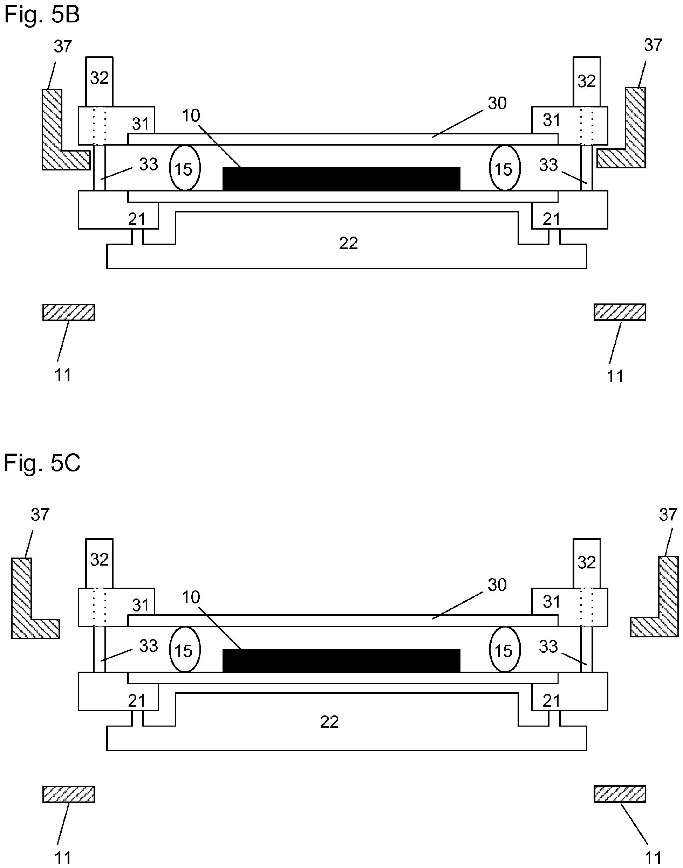

Mit Bezug auf die Fig. 5A bis 5E wird nun eine weitere Ausführungsform der Erfindung dargestellt. Hierbei wird insbesondere eine Situation dargestellt, wie Sie beispielsweise bei der Belade-/Entladestation 12 anzutreffen ist. Auf der Unterlage 20, welche in Tragrahmenelementen 21 eingebettet ist, ist eine Faserverbundstruktur 10 angeordnet. Die Unterlage 20 bzw. die Tragrahmenelemente 21 liegen dabei auf der Fördervorrichtung 11 auf, welche in diesem Bereich einen Ausschnitt aufweist, durch welchen ein Hubtisch 22 in Richtung der Fördervorrichtung 11 bewegbar ist. Oberhalb der Unterlage ist in einem Abstand die Abdeckung 30, gehalten in den Tragrahmenelementen 31 angeordnet. Die Abdeckung 30 bzw. die Tragrahmenelemente 31 werden dabei von mehreren Halteelementen 37 auf einem Abstand zur Unterlage 20 gehalten um ein Einlegen der Faserverbundstruktur auf die Unterlage 20 und/oder das Einbringen des Dichtelements 15 zu ermöglichen. Die Halteelemente 37 halten die Abdeckung 30 bzw. die Tragrahmenelemente an vereinzelten Punkten oder Flächen, jedoch bevorzugt nicht vollflächig umlaufend. Nach erfolgter Ablage der Faserverbundstruktur 10 und des Dichtelemente 15 auf der Unterlage 20 verfährt der Hubtisch 22 in Richtung der Fördervorrichtung 11 und hebt die Unterlage aus der Fördervorrichtung 11 heraus wie in Fig. 5B dargestellt. Dabei wird der Hubtisch 22 soweit in Richtung der Abdeckung 30 verfahren, bis die Zylinder 33 die Tragrahmenelemente 21 berühren bzw. bis das Dichtelement 15 sowohl mit der Abdeckung 30 als auch mit der Unterlage 20 in Kontakt ist und einen Zwischenraum ausbildet, welcher mittels einer Vakuumpumpe evakuiert werden kann. Durch den Hubtisch 22 als auch die Halteelemente 37 kann die Abdeckung 30 zur Unterlage 20 auch horizontal zueinander bewegt werden, wodurch die Abdeckung 30 zur Unterlage 20 optimal ausgerichtet werden kann. Durch den entstehenden Unterdruck im Zwischenraum zwischen Abdeckung 30 und der Unterlage 20 werden die Unterlage 20 und die Abdeckung 30 bewegen sich die Unterlage 20 und die Abdeckung 30 aufeinander zu. Weiterhin entsteht durch die Gewichtskraft der Abdeckung 30 und der durch den Unterdruck im Zwischenraum resultierenden Kraft eine kraftschlüssige Verbindung zwischen der Unterlage 20 und der Abdeckung 30 über die Zylinder 33 und die Dichtelemente 15, wodurch die Abdeckung 30 von den Halteelementen 37 gelöst werden kann und auf der Unterlage 20 nun aufliegt. Die Abdeckung 30 und die Unterlage 20 sind durch die kraftschlüssige Verbindung auch in Ihrer Position zueinander fixiert und können sich nicht zueinander verschieben.

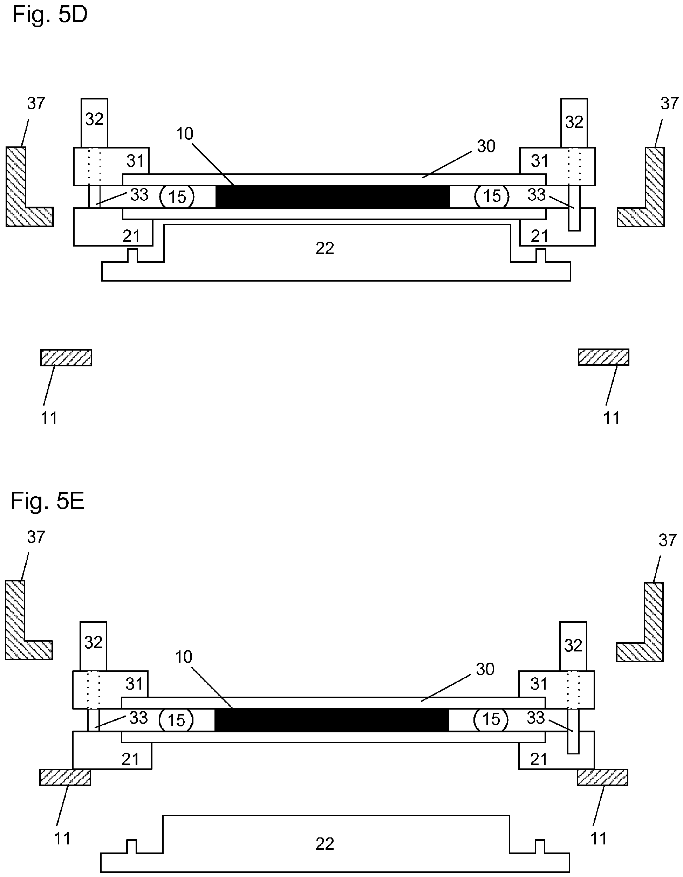

Während die Abdeckung 30 durch den Unterdruck im Zwischenraum zwischen Abdeckung 30 und Unterlage 20 ihre Kontaktfläche mit der Faserverbundstruktur 10 erhöht kann der Hubtisch die Anordnung aus Unterlage 20, Faserverbundstruktur 10 und Abdeckung 30 nach unten in Richtung der Fördervorrichtung 11 bewegen. Die Abdeckung 30 kann hierbei auch schon komplett auf der Faserverbundstruktur 10 aufliegen wie in Fig. 5D dargestellt. Bevorzugt sollte die Abdeckung 30 in nahezu vollständigen Kontakt mit der Faserverbundstruktur 10 sein, wenn der Hubtisch 22 die Anordnung aus Unterlage 20, Faserverbundstruktur 10 und Abdeckung 30 auf der Fördervorrichtung 11 ablegt, wie in Fig. 5E dargestellt. Der Hubtisch 22 kann nach Ablage der Anordnung außerhalb des Wirkbereiches der Fördervorrichtung 11 gefahren werden, so dass im vorliegenden Fall die Anordnung aus Unterlage 20, Faserverbundstruktur 10 und Abdeckung 30 von der Belade-/Entladestation 12 zur nächsten Station, der Heizstation 13 verfahren werden kann, um dort auf eine Temperatur bevorzugt über der Schmelztemperatur des zumindest einen thermoplastischen Polymers erwärmt wird.

In einer weiter Ausgestaltung könnte der Hubtsich 22 auch mit einer Strahlungsquelle 14, insbesondere mit Infrarotröhren51, 52, ausgestattet sein und ein Vorgang wie in den Fig. 5A bis 5E beschrieben und in der Heizstation 14 nach erfolgter Ablage der Faserverbundstruktur 10 auf der Unterlage 20 erfolgen. Die Faserverbundstruktur 10 würde durch den Hubtisch 22 mit integrierter Strahlungsquelle 14 von der Seite der Unterlage 20 erwärmt werden. Weiterhin könnte in der Heizstation 14 oberhalb der Abdeckung 30 eine weitere Strahlungsquelle, wie beispielsweise in Fig. 4A dargestellt, angeordnet sein. Die Halteelemente 37, welche die Abdeckung 30 bzw. die Tragrahmenelemente 31 und an vereinzelten Punkten oder Flächen halten nicht stören, da diese außerhalb des Wirkbereiches der Strahlungsquelle angeordnet sind.

Alternativ könnte wie zuvor beschrieben der Hubtisch 22 auch in einer Kühlstation 14 Anwendung finden, wobei dieser dann bevorzugt mit einer Kühleinrichtung, insbesondere einer Flächenkühlung ausgestattet wäre. Der Hubtisch 22 könnte die Anordnung aus Unterlage 20, Faserverbundstruktur 10 und Abdeckung 30 in Richtung einer weiteren Kühleinrichtung bewegen, welche die Faserverbundstruktur 10 über die Abdeckung 30 kühlen kann.

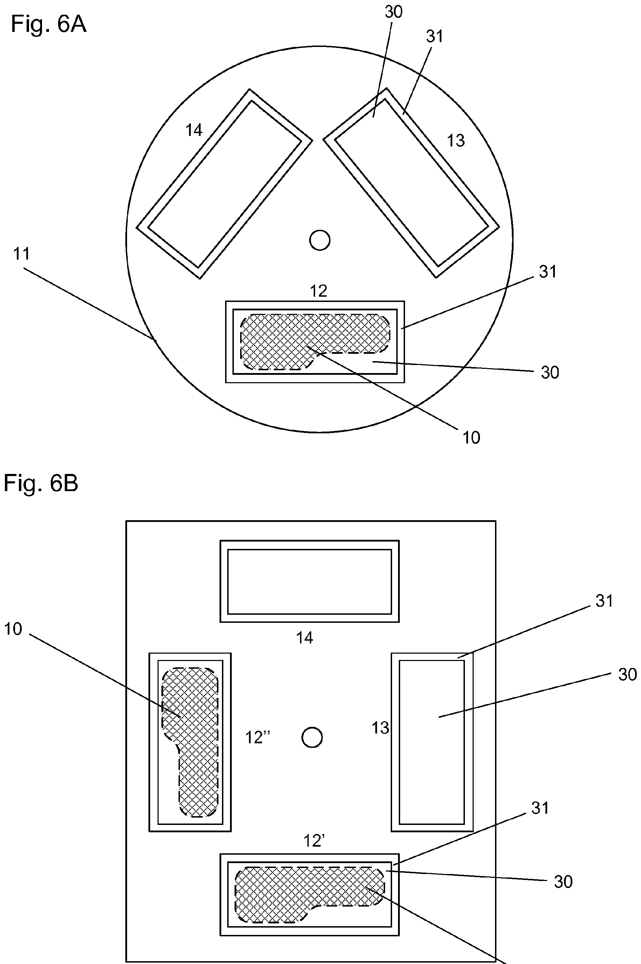

In den Figuren 6A und 6B sind schematisch zwei Ausführungsformen für die Anordnung der verschiedenen Stationen zum Konsolidieren einer Faserverbundstruktur 10 dargestellt. Bevorzugt sind die die Belade-/Entladestation 12, die Heizstation 13 und die Kühlstation 14 auf einer als Drehtisch ausgebildeten Fördervorrichtung 11 angeordnet, welche um einen Drehpunkt drehbar gelagert ist. Die jeweiligen Einrichtungen wie Strahlungsquellen 14 oder Kühleinrichtung sind ortsfest an den einzelnen Stationen angeordnet und die Fördereinrichtung 11 bewegt die Anordnung aus Unterlage 20, Faserverbundstruktur 10 und Abdeckung 30 zu den jeweiligen Stationen. Die Fördereinrichtung 11 hat bevorzugt einen Ausschnitt, an dessen Rand die Tragrahmenelemente 21 der Unterlage 20 aufliegen können. Durch die Ausschnitte ist es beispielsweise möglich, dass ein Hubtisch 22 die Unterlage 20 aus der Fördervorrichtung 11 aufnehmen kann oder auch, dass die Faserverbundstruktur 10 in der Heizstation 13 oder der Kühlstation 14 über die Abdeckung 30 und die Unterlage 20 erwärmt bzw. gekühlt werden kann.

Alternativ kann die Belade-/Entladestation 12 auch in zwei getrennte Einheiten aufgeteilt sein, wie in Fig. 6B, so dass die Fördereinrichtung 11 eine Beladestation 12' und eine Entladestation 12" umfasst. Diese Anordnung kann sinnvoll sein, wenn das Beladen und Entladen der Faserverbundstruktur 10 ein Nadelöhr in der Zykluszeit darstellt. Insbesondere bei Faserverbundstrukturen, welche geringe Zieldicke aufweisen und sich daher schnell aufheizen und Abkühlen kann die Unterteilung der Belade-/Entladestation 12 in eine Beladestation 12' und Entladestation 12" die Taktzeit zur Konsolidierung der Faserverbundstruktur 10 und somit auch den Durchsatz durch eine solche Anlage weiter erhöhen.

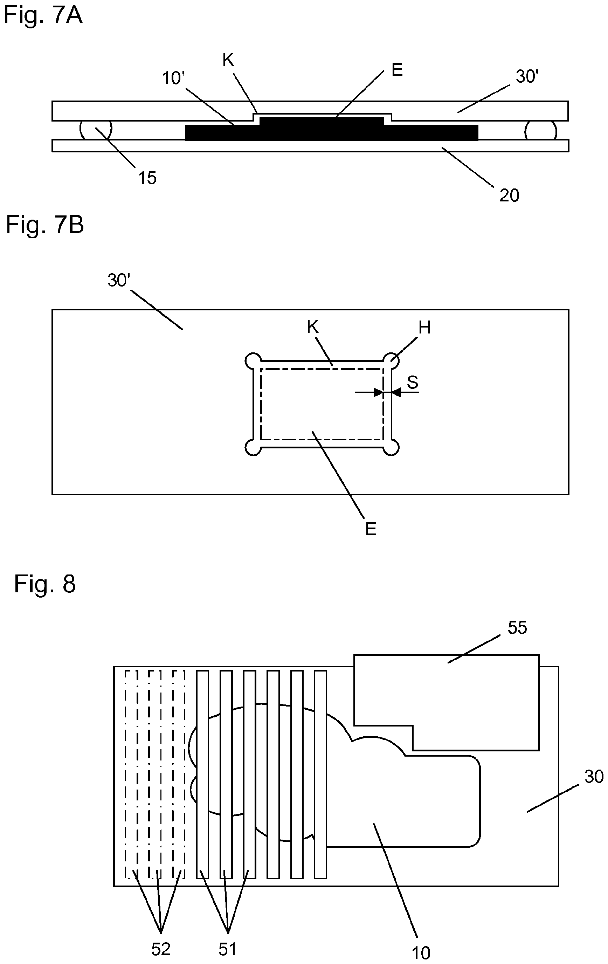

Die vorstehend beschriebenen Ausführungsformen eignen sich insbesondere zum Verpressen und Konsolidieren von flachen Faserverbundstrukturen 10, das heißt, Faserverbundstrukturen 10, die eine im Wesentlichen gleichmäßige Dicke aufweisen. Für zunehmend viele Anwendungen und Einsatzgebiete von faserverstärkten Bauteile besteht jedoch die Anforderung, dass diese Bauteile lokale Verstärkungen aufweisen sollen, beispielsweisen in Bauteilbereichen, an denen später Scharniere angesetzt werden sollen, oder an denen eine Verbindung mit anderen Bauteilen erfolgen soll. Für derartige Anwendungen werden bereits die Faserverbundstrukturen 10, beispielsweise als im Tapelegeverfahren ausgebildete Tailored Blanks, mit entsprechenden lokal verstärkten Abschnitten gelegt. Um derartige lokal verstärkte, mit Erhebungen versehene Faserverbundstrukturen 10 zu verpressen und zu einem Laminat zu konsolidieren, wird mit einer weiteren bevorzugten Ausführungsform, wie in den Fig. 7A und 7B gezeigt, vorgesehen, eine angepasste Abdeckung 30' zu verwenden.

Die Fig. 7A zeigt schematisch eine Faserverbundstruktur 10', welche hier beispielhaft in einem mittleren Bereich einen lokal verstärkten Abschnitt mit einer Erhebung E aufweist. Weiter ist vorgesehen, die Abdeckung 30' mit einer der Erhebung E entsprechenden Kavität K auszubilden. Die Kavität K in der Abdeckung 30' kann beispielsweise durch Fräsen gebildet werden. In der Fig. 7B, welche eine Ansicht der Abdeckung 30' von unten zeigt, ist dabei zu erkennen, dass die Kavität K die Erhebung E mit einem umlaufenden Spalt S umgibt. Der Spalt S weist dabei bevorzugt eine Breite zwischen 3 und 15 mm, besonders bevorzugt zwischen 5 und 10 mm auf. Indem ein derartiger Spalt S vorgesehen wird, wird ein freier Strömungskanal bereitgestellt, über den unter Wirkung des Unterdrucks und mittels der Vakuumpumpe (nicht dargestellt) in der Faserverbundstruktur 10', insbesondere im Bereich der Erhebung E, eingeschlossene Luft oder sich durch die Erwärmung bildende Dämpfe abgesaugt und abgeführt werden können.

Das freie Strömen und Abführen von Luft und Dämpfen wird dabei insbesondere von der Biegung der Abdeckung 30 unterstützt, wie vorstehend beschrieben, welche dafür sorgen kann, dass der Spalt S zu einer Seite der Abdeckung 30 hin erst zu einem späten Zeitpunkt in Kontakt mit der Oberfläche der Faserverbundstruktur 10' kommt und somit geschlossen wird, zu welchem Zeitpunkt bereits eine weitgehende Absaugung für den Bereich der Erhebung E stattgefunden hat. Alternativ oder ergänzend kann auch eine aktive Entlüftung des Spalts S vorgesehen werden, beispielsweise indem der Druck im Zwischenraum temporär erhöht, bzw. das Vakuum verringert wird, und/oder die Abdeckung 30' angehoben wird, um eine zumindest teilweise Reduzierung der Auflage der Abdeckung 30' auf der Faserverbundstruktur 10' zu erzielen und so eine Entlüftung des Spalts S zu ermöglichen. Es kann ebenfalls in Betracht gezogen werden, einen Entlüftungskanal vorzusehen, der beispielsweise als eine schmale Nut in die Oberfläche der Abdeckung 30' eingearbeitet wird, oder als Bohrung, die sich durch die Abdeckung 30' hindurch erstreckt und ebenfalls mit der Vakuumpumpe verbunden wird. Andere Arten einer Entlüftung des Spalts S sind ebenfalls denkbar.

Wie aus den Fig. 7A und 7B zu erkennen, bilden die Faserverbundstruktur 10' und die Abdeckung 30' weitgehend komplementäre Geometrien, so dass die Gesamtgeometrie von Unterlage 20, Faserverbundstruktur 10' und Abdeckung 30' insgesamt eine im Wesentlichen plattenförmige Form gleichbleibender Dicke aufweist.

Es wird sich dabei der Vorteil zu Nutze gemacht, dass insbesondere eine als Glasplatte ausgebildete Abdeckung 30' eine weitgehend ähnliche Wärmekapazität aufweist wie die üblicherweise in Faserverbundstrukturen 10' verwendete Materialien. Aus diesem Grund kann bei einer gleichen Flächenstrahlleistung der Strahlungsquellen 14 der lokal verstärkte Abschnitt der Erhebung E, das heißt, der dickere Abschnitt der Faserverbundstruktur 10', auf Grund der an dieser Stelle dünneren Glasschicht der Abdeckung 30' in derselben Zeit durchgeheizt werden, wie dies an den Stellen mit dünnerer Dicke der Faserverbundstruktur 10' der Fall ist.

Die Kavität K wird bevorzugt mit Untermaß ausgebildet, um die Schwindung des Materials durch die Konsolidierung auszugleichen.

Wie in der Fig. 7B weiter zu erkennen ist, wird die Kavität K vorzugsweise mit hinterschnittenen Eckenradien H ausgebildet, so dass auch Erhebungen E mit scharfkantigen Ecken geeignet bearbeitet werden können. Dies ist insbesondere vorteilhaft, wenn die zu verpressenden und zu konsolidierenden Faserverbundstrukturen durch ein Tapelegeverfahren gebildet werden, in welchem üblicher Weise rechteckige Tapeabschnitte verarbeitet und zu einer gewünschten Faserverbundstruktur gelegt werden.

Die mit einer Kavität K versehene Abdeckung 30' kann geeignet als Abdeckung 3 oder 30 in den hierin beschriebenen und/oder genannten Verfahren zum Konsolidieren verwendet werden, um die genannten Verfahren geeignet zum Konsolidieren von Faserverbundstrukturen 10, 10' mit Höhensprüngen zu ertüchtigen.

Mit Bezug auf Fig. 8 wird weiter eine beispielhafte Ausgestaltung der Strahlungsquellen 14 erläutert. Wie in Fig. 6 gezeigt, umfassen die Strahlungsquellen 14 vorzugsweise eine Vielzahl von Infrarotröhren 51, 52, die sich quer zur Abdeckung 30 bzw. zur Unterlage 20 erstrecken. Die Infrarotröhren 51, 52 sind bevorzugt so ausgelegt und angeordnet, eine gleichmäßige flächenbezogene Strahlungsleistung zu erzeugen, um eine möglichst gleichmäßige Erwärmung der Faserverbundstruktur 10 zu ermöglichen. Besonders bevorzugt ist dabei vorgesehen, dass die Infrarotröhren 51, 52 einzeln oder in Gruppen selektive eingeschaltet werden können, so dass abhängig von der Größe, Form und Lage der Faserverbundstruktur 10 nur notwendige Bereiche bestrahlt werden. In dem Beispiel der Fig. 6 können beispielsweise die Infrarotröhren 52, welche sich über die Faserverbundstruktur 10 erstrecken, eingeschaltet werden, während die Infrarotröhren 51, welche die Faserverbundstruktur 10 nicht überlappen, ausgeschaltet verbleiben. Dies kann zu einer Einsparung von Energie und damit zur Kostensenkung verwendet werden. Ebenfalls kann vorgesehen werden, dass in Bereichen, in denen eine Bestrahlung mit Infrarotlicht nur teilweise erforderlich bzw. gewünscht ist, ein Abschattelement 55 vorgesehen ist, um zu verhindern, dass in diesem Bereich, in dem sich kein Anteil der Faserverbundstruktur 10 befindet, die Abdeckung 30 bzw. die Unterlage 20 bestrahlt und aufgeheizt wird, oder sich die obere und untere Strahlungsquellen 14 in diesem Bereich auf Grund der nicht vorhandenen Faserverbundstruktur 10 durch die Abdeckung 30 und die Unterlage 20 hindurch allein gegenseitig aufheizen und so gegenseitig thermischer Belastung und gegebenenfalls vorzeitiger Alterung aussetzen.

### Bezugszeichenliste P1547:

- 1, 10, 10': Faserverbundstruktur
- 2,20: Unterlage
- 3, 30, 30': Abdeckung
- 4, 14: Strahlungsquelle
- 5, 15: Dichtelement
- 6: Rohrstutzen
- 11: Fördervorrichtung
- 12, 12', 12": Belade-/Entladestation
- 13: Heizstation
- 14: Kühlstation
- 21: Tragrahmenelement
- 22: Hubtisch
- 31: Tragrahmenelement
- 32: Aktuator
- 33: Zylinder
- 35: Federelement
- 36: Anschlagstück
- 37: Halteelement
- 40: Distanzstück
- 51, 52: Infrarotröhren
- 55: Abschattelement
- A: Teilabschnitt
- E: Erhebung
- H: Eckenradius
- K: Kavität
- S: Spalt

## Patentansprüche

1. Verfahren zum Konsolidieren einer Faserverbundstruktur (10, 10') mit zumindest einem thermoplastischen und/oder thermoelastischen Polymer, umfassend Anordnen der Faserverbundstruktur (10, 10') zwischen einer plattenförmigen Unterlage (20) und einer plattenförmigen Abdeckung (30, 30') in einer Belade-/Entladestation (12) einer Fördervorrichtung (11), wobei die Abdeckung (30, 30') durch ein Dichtelement (15) in Bezug auf die Unterlage (20) verlagerbar gegen die Unterlage (20) abgedichtet wird,
Erzeugen eines Unterdrucks in dem Zwischenraum zwischen der Unterlage (20) und der Abdeckung (30, 30'), so dass der Umgebungsdruck die Abdeckung (30, 30') gegen die Unterlage (20) drückt und die Faserverbundstruktur (10, 10') zwischen der Abdeckung (30, 30') und der Unterlage (20) geklemmt wird, Erwärmen der Faserverbundstruktur (10, 10') mittels elektromagnetischer Strahlung vorzugsweise zumindest bis in den Bereich der Schmelztemperatur des zumindest einen thermoplastischen und/oder thermoelastischen Polymers in einer Heizstation (13) der Fördervorrichtung (11),
Kühlen der Faserverbundstruktur (10, 10') in einer Kühlstation (14) der Fördervorrichtung (11), wobei die Kühlung in der Kühlstation (14) über eine in sich geschlossene Flächenkühlung, insbesondere einen Kühltisch, erfolgt, wobei die Flächenkühlung in Kontakt mit der Unterlage (20) und/oder mit der Abdeckung (30, 30') steht; und
Entnahme der konsolidierten Faserverbundstruktur (10, 10') von der Unterlage (20) oder Entnahme der mit der konsolidierten Faserverbundstruktur (10, 10') belegten Unterlage (20) aus der Fördervorrichtung (11).

2. Verfahren nach einem der vorstehenden Ansprüche, **dadurch gekennzeichnet, dass** die konsolidierte Faserverbundstruktur (10, 10') nach der Entnahme aus der Fördervorrichtung (11) einer Presse, insbesondere einer Stanzpresse zugeführt wird und/oder die Fördervorrichtung (11) als drehbar ausgebildet ist.

3. Verfahren nach einem der vorhergehenden Ansprüche, **dadurch gekennzeichnet, dass** nach dem Anordnen der Faserverbundstruktur (10, 10') auf der Unterlage (20) die Unterlage (20) aus der Fördervorrichtung (11) mittels eines Hubtisches (22) angehoben und auf die Abdeckung (30, 30') zubewegt wird und/oder die Abdeckung (30, 30') oberhalb der Fördervorrichtung (11) mittels Halteelementen (37) gehalten und auf die Unterlage (20) zubewegt wird.

4. Verfahren nach einem der vorstehenden Ansprüche, **dadurch gekennzeichnet, dass** sobald ein Unterdruck im Zwischenraum zwischen Unterlage (20) und Abdeckung (30, 30') aufgebaut ist die Abdeckung (30, 30') aus dem zumindest einen Halteelement (37) gelöst wird und der Hubtisch (22) die Anordnung aus Unterlage (20), Abdeckung (30, 30') und dazwischen platzierter Faserverbundstruktur (10, 10') in der Fördervorrichtung (11), bevorzugt in der Belade-/Entladestation (12) ablegt.

5. Verfahren nach einem der vorstehenden Ansprüche, **dadurch gekennzeichnet, dass** während des Verpressens der Faserverbundstruktur (10, 10') eine Erkennung von Blasenbildung ausgeführt wird, wobei im Fall der Blasenbildung der Druck im Zwischenraum temporär erhöht und/oder die Abdeckung (30, 30') angehoben wird, um eine zumindest teilweise Reduzierung der Auflage der Abdeckung (30, 30' auf der Faserverbundstruktur (10, 10') zu erzielen und so einen lokalen Entlüftungspfad zum Abziehen der Luft oder des Dampfes zu ermöglichen.

6. Verfahren nach Anspruch 5, **dadurch gekennzeichnet, dass** die Erkennung von Blasenbildung erfolgt, indem der Betrag des Unterdrucks in dem Zwischenraum überwacht wird, und/oder indem mittels einer Thermobildkamera die Temperaturverteilung in der Faserverbundstruktur (10, 10') erfasst wird, wobei bei Vorliegen einer im Thermobild erkennbaren lokalen Kaltstelle relativ zu einer heißen Umgebung auf das Vorliegen einer Blase geschlossen wird.

7. Verfahren nach einem der vorstehenden Ansprüche, **dadurch gekennzeichnet, dass** die Flächenkühlung als ein Kühltisch ausgebildet ist, welcher die Anordnung aus Unterlage (20), Abdeckung (30, 30') und dazwischen platzierter Faserverbundstruktur (10, 10') aus der Fördervorrichtung (11) anheben kann und einer weiteren Flächenkühlung über die Abdeckung (30, 30') zuführen kann.

8. Verfahren nach einem der vorstehenden Ansprüche, **dadurch gekennzeichnet, dass** die Faserverbundstruktur (10, 10') in der Kühlstation (14) auf eine Temperatur gekühlt wird, welche unterhalb der Schmelztemperatur und oberhalb der Erweichungstemperatur des zumindest einen thermoplastischen und/oder thermoelastischen Polymers liegt, oder welche unterhalb der Erweichungstemperatur des zumindest einen thermoplastischen und/oder thermoelastischen Polymers liegt.

9. Verfahren nach einem der vorstehenden Ansprüche, **dadurch gekennzeichnet, dass** die Faserverbundstruktur (10, 10') in der Kühlstation (14) auf eine Temperatur unterhalb 150°C, bevorzugt unterhalb 120°C, besonders bevorzugt unterhalb von 100°C gekühlt wird.

10. Verfahren nach einem der vorstehenden Ansprüche, **dadurch gekennzeichnet, dass** die Erwärmung der Faserverbundstruktur (10, 10') mittels elektromagnetischer Strahlung vor, gleichzeitig mit oder nach dem Verpressen der Faserverbundstruktur (10, 10') zwischen der Abdeckung (30, 30') und der Unterlage (20) erfolgt und/oder die Abdeckung (30, 30') und/oder die Unterlage (20) als eine Glasplatte ausgebildet ist oder diese umfasst.

11. Anlage zum Konsolidieren einer Faserverbundstruktur (10, 10'), wobei die Anlage eine Fördervorrichtung (11) umfassend eine Belade-/Entladestation (12), eine Heizstation (13) und eine Kühlstation (14) umfasst und die Anlage derart eingerichtet ist,
in der Belade-/Entladestation (12) die Faserverbundstruktur (10, 10') auf eine Unterlage (20) abzulegen oder eine Unterlage (20) mit einer Faserverbundstruktur (10, 10') in die Anlage einzubringen, und eine Abdeckung (30, 30') über der Unterlage (20) zu positionieren, und mittels einer Vakuumpumpe einen Unterdruck in dem Zwischenraum zwischen der Abdeckung (30, 30') und der Unterlage (20) zu erzeugen, weiter die Unterlage (20) und die Abdeckung (30, 30') mit der dazwischen platzierten Faserverbundstruktur (10, 10') zur Heizstation (13) zu bewegen,
in der Heizstation (13) die Faserverbundstruktur (10, 10') mittels der zumindest einen Strahlungsquelle (14) vorzugsweise zumindest bis in den Bereich der Schmelztemperatur des zumindest einen thermoplastischen und/oder thermoelastischen Polymers zu erwärmen, und mittels der Vakuumpumpe den Unterdruck in dem Zwischenraum zum Verpressen der Faserverbundstruktur (10, 10') zwischen der Abdeckung (30, 30') und der Unterlage (20) Aufrecht zu erhalten oder noch weiter zu erhöhen,
nach erfolgter Verpressung, die Unterlage (20) und die Abdeckung (30, 30') mit der dazwischen platzierten verpressten Faserverbundstruktur (10, 10') zur Kühlstation (14) zu bewegen und in der Kühlstation (14) die Anordnung aus Unterlage (20), Abdeckung (30, 30') und der dazwischen platzierten Faserverbundstruktur (10, 10') zu kühlen, wobei in der Kühlstation (14) eine in sich geschlossene Flächenkühlung, bevorzugt ein Kühltisch, angeordnet ist, mittels welcher die Anordnung aus Unterlage (20), Abdeckung (30, 30') und dazwischen platzierter Faserverbundstruktur (10, 10') aus der Fördervorrichtung (11) heraushebbar und ablegbar und eine Kühlwirkung durch die Unterlage (20) erzielbar ist und/oder wobei in der Kühlstation (14) eine in sich geschlossene Flächenkühlung, bevorzugt ein Kühltisch, angeordnet ist, welche auf die Abdeckung (30, 30') zubewegbar und eine Kühlwirkung durch die Abdeckung (30, 30') erzielbar ist;
nach erfolgter Abkühlung, die Unterlage (20) und die Abdeckung (30, 30') mit der dazwischen platzierten Faserverbundstruktur (10, 10') zur Belade-/Entladestation (12) zu bewegen, und in der Belade-/Entladestation (12) die Abdeckung (30, 30') mittels Halteelementen (37) von der Unterlage (20) abzuheben zur Entnahme der konsolidierten Faserverbundstruktur (10, 10') von der Unterlage (20) oder zur Entnahme der mit der konsolidierten Faserverbundstruktur (10, 10') belegten Unterlage (20).

12. Anlage nach Anspruch 11, weiter umfassend eine Presse, insbesondere Stanzpresse.

13. Anlage nach einem der Ansprüche 11 bis 12, **dadurch gekennzeichnet, dass** die Fördervorrichtung (11) als Drehtisch ausgebildet ist und/oder die Abdeckung (30, 30') und/oder die Unterlage (20) als eine Glasplatte ausgebildet ist oder diese umfasst.

14. Anlage nach einem der Ansprüche 11 bis 13, **dadurch gekennzeichnet, dass** in der Belade-/Entladestation (12) ein Hubtisch (22) angeordnet ist, um die Unterlage (20) mit der darauf abgelegten Faserverbundstruktur (10, 10') von der Fördervorrichtung (11) weg und zu ihr hin zu bewegen und/oder ein Halteelement (37) angeordnet ist, um die Abdeckung (30, 30') oberhalb der Fördervorrichtung (11) zu Halten und auf die Unterlage (20) hin und von ihr weg zu bewegen.

15. Anlage nach einem der Ansprüche 11 bis 14, **dadurch gekennzeichnet, dass** die Anlage einen Sensor zur Erfassung des Drucks in dem Zwischenraum und/oder eine Thermobildkamera zur Erfassung eines Bildes der Temperaturverteilung in der Faserverbundstruktur (10, 10') umfasst, wobei die Anlage weiter eine Steuereinheit umfasst, die eingerichtet ist, bei Erkennen eines plötzlichen Druckanstiegs bzw. einer im Thermobild erkennbaren lokalen Kaltstelle relativ zu einer heißen Umgebung zu bestimmen, dass eine Blase vorliegt, und bei Vorliegen einer Blase die Vakuumpumpe und/oder die als Aktuatoren ausgebildeten Abstützeinrichtungen anzuweisen, den Druck im Zwischenraum temporär zu erhöhen und/oder die Abdeckung (30, 30') anzuheben, um eine zumindest teilweise Reduzierung der Auflage der Abdeckung (30, 30') auf der Faserverbundstruktur (10, 10') zu erzielen und so einen lokalen Entlüftungspfad zum Abziehen der Luft oder des Dampfes zu ermöglichen.

## Claims

1. A method of consolidating a fibre composite structure (10, 10') with at least one thermoplastic and/or thermoelastic polymer, including arranging the fibre composite structure (10, 10') between a plate-shaped base (20) and a plate-shaped cover (30, 30') in a loading/unloading station (12) of a conveyor device (11), wherein the cover (30, 30') is movably sealed with respect to the base (20) by a sealing element (15), producing a reduced pressure in the space between the base (20) and the cover (30, 30') so that the atmospheric pressure presses the cover (30, 30') against the base (20) and the fibre composite structure (10, 10') is clamped between the cover (30, 30') and the base (20), heating the fibre composite structure (10, 10') by means of electromagnetic radiation, preferably at least up to the region of the melting temperature of the at least one thermoplastic and/or thermoelastic polymer, in a heating station (13) of the conveyor device (11), cooling the fibre composite structure (10, 10') in a cooling station (14) of the conveyor device (11), wherein the cooling in the cooling station (14) occurs by means of a self-contained surface cooler, particularly a cooling table, wherein the surface cooler is in contact with the base (20) and/or with the cover (30, 30'); and removing the consolidated fibre composite structure (10, 10') from the base (20) or removing the base (20) occupied by the consolidated fibre composite structure (10, 10') from the conveyor device (11).

2. A method as claimed in one of the preceding claims, **characterised in that** the consolidated fibre composite structure (10, 10') is supplied, after removal from the conveyor device (11), to a press, particularly a punch press and/or the conveyor device (11) is constructed to be rotatable.

3. A method as claimed in one of the preceding claims, **characterised in that** after arranging the fibre composite structure (10, 10') on the base (20), the base (20) is raised out of the conveyor device (11) by means of a lifting table (22) and moved towards the cover (30, 30') and/or the cover (30, 30') is held above the conveyor device (11) by means of retaining elements (37) and moved towards the base (30).

4. A method as claimed in one of the preceding claims, **characterised in that** as soon as a reduced pressure is created in the space between the base (20) and cover (30, 30'), the cover (30, 30') is released from the at least one retaining element (37) and the lifting table (22) puts the structure consisting of the base (20), cover (30, 30') and the fibre composite structure (10, 10') placed between them down in the conveyor device (11), preferably in the loading/unloading station (12).

5. A method as claimed in one of the preceding claims, **characterised in that** during the compression of the fibre composite structure (10, 10'), detection of bubble formation is performed, wherein in the event of bubble formation the pressure in the space is temporarily increased and/or the cover (30, 30') is raised in order to produce an at least partial reduction in the engagement of the cover (30, 30') with the fibre composite structure (10, 10') and thus make possible a local venting path for the escape of the air or the steam.

6. A method as claimed in Claim 5, **characterised in that** the detection of bubble formation is effected by monitoring the value of the reduced pressure in the space and/or by determining the temperature distribution in the fibre composite structure (10, 10') by means of a thermal imaging camera, whereby when a local cold spot relative to a hot environment detectable in the thermal image is present it is concluded that a bubble is present.

7. A method as claimed in one of the preceding claims, **characterised in that** the surface cooler is constructed in the form of a cooling table, which can raise the structure consisting of the base (20), cover (30, 30') and the fibre composite structure (10, 10') positioned between them out of the conveyor device (11) and can supply it to a further surface cooler above the cover (30, 30').

8. A method as claimed in one of the preceding claims, **characterised in that** the fibre composite structure (10, 10') is cooled in the cooling station (14) to a temperature which lies below the melting temperature and above the softening temperature of the at least one thermoplastic and/or thermoelastic polymer, or which lies below the softening temperature of the at least one thermoplastic and/or thermoelastic polymer.

9. A method as claimed in one of the preceding claims, **characterised in that** the fibre composite structure (10, 10') is cooled in the cooling station (14) to a temperature below 150°C, preferably below 120°C, particularly preferably below 100°C.

10. A method as claimed in one of the preceding claims, **characterised in that** the heating of the fibre composite structure (10, 10') by means of electromagnetic radiation occurs before, simultaneously with or after the compression of the fibre composite structure (10, 10') between the cover (30, 30') and the base (20) and/or the cover (30, 30') and/or the base (20) is constructed in the form of a glass plate or includes one.

11. A machine for consolidating a fibre composite structure (10, 10'), wherein the machine includes a conveyor device (11), including a loading/unloading station (12), a heating station (13) and a cooling station (14) and the machine is arranged to place the fibre composite structure (10, 10') on a base (20) in the loading/unloading station (12) or to introduce a base (20) with a fibre composite structure (10, 10') into the machine and to position a cover (30, 30') above the base (20) and to produce a reduced pressure by means of a vacuum pump in the space between the cover (30, 30') and the base (20) and further to move the base (20) and the cover (30, 30') with the fibre composite structure (10, 10') positioned between them to the heating station (13), to heat the fibre composite structure (10, 10') in the heating station (13) by means of the at least one radiation source (14), preferably at least up to the region of the melting temperature of the at least one thermoplastic and/or thermoelastic polymer and by means of the vacuum pump to maintain the reduced pressure in the space in order to compress the fibre composite structure (10, 10') between the cover (30, 30') and the base (20) or to further increase it, after compression has been effected, to move the base (20) and the cover (30, 30') with the compressed fibre composite structure (10, 10') positioned between them to the cooling station (14) and to cool the structure consisting of the base (20), cover (30, 30') and the fibre composite structure (10, 10') positioned between them in the cooling station (14), wherein arranged in the cooling station (14) there is a self-contained surface cooler, preferably a cooling table, by means of which the structure comprising the base (20), cover (30, 30') and fibre composite structure (10, 10') positioned between them may be lifted out of the conveyor device (11) and may be put down and a cooling action may be achieved through the base (20) and/or wherein arranged in the cooling station (14) there is a self-contained surface cooler, preferably a cooling table, which is movable towards the cover (30, 30') and a cooling action may be achieved through the cover (30, 30'); after cooling has been effected, to move the base (20) and the cover (30, 30') with the fibre composite structure (10, 10') positioned between them to the loading/unloading station (12) and, in the loading/unloading station (12), to lift up the cover (30, 30') from the base (20) by means of retaining elements (37) to remove the consolidated fibre composite structure (10, 10') from the base (20) or to remove the base (20) occupied by the consolidated fibre composite structure (10, 10').

12. A machine as claimed in Claim 11, further including a press, particularly a punch press.

13. A machine as claimed in one of Claims 11 to 12, **characterised in that** the conveyor device (11) is constructed in the form of a rotary table and/or the cover (30, 30') and/or the base (20) is constructed in the form of a glass plate or includes one.

14. A machine as claimed in one of Claims 11 to 13, **characterised in that** arranged in the loading/unloading station (12) there is a lifting table (22) in order to move the base (20) with the fibre composite structure (10, 10') positioned on it away from the conveyor device (11) and towards it and/or a retaining element (37) is arranged in order to hold the cover (30, 30') above the conveyor device (11) and to move it towards the base (20) and away from it.

15. A machine as claimed in one of Claims 11 to 14, **characterised in that** the machine includes a sensor for detecting the pressure in the space and/or a thermal imaging camera for detecting an image of the temperature distribution in the fibre composite structure (10, 10'), wherein the machine further includes a control unit, which is arranged, on detection of a sudden pressure rise or of a local cold spot relative to a hot environment detectable in the thermal image to determine that a bubble is present and when a bubble is present to direct the vacuum pump and/or the support devices constructed in the form of actuators temporarily to increase the pressure in the space and/or to raise the cover (30, 30') in order to achieve an at least partial reduction in the engagement of the cover (30, 30') with the fibre composite structure (10, 10') and so to enable a local venting path for discharge of the air or the steam.

## Revendications

1. Procédé pour consolider une structure liée par des fibres (10, 10') comprenant au moins un polymère thermoplastique et/ou thermoélastique, comprenant disposer la structure liée par des fibres (10, 10') entre un support en forme de plaque (20) et un couvercle en forme de plaque (30, 30') dans une station de chargement/déchargement (12) d'un dispositif de convoyage (11), dans lequel le couvercle (30, 30') est rendu étanche par rapport au support (20) par un élément d'étanchéité (15) en pouvant être déplacé contre le support (20),
produire une dépression dans l'espace intermédiaire entre le support (20) et le couvercle (30, 30'), de telle sorte que la pression environnante presse le couvercle (30, 30') contre le support (20) et que la structure liée par des fibres (10, 10') soit serrée entre le couvercle (30, 30') et le support (20),
échauffer la structure liée par des fibres (10, 10') au moyen d'un rayonnement électromagnétique, de manière préférée jusque dans le domaine de la température de fusion du polymère thermoplastique et/ou thermoélastique, dans une station de chauffage (13) du dispositif de convoyage (11),
refroidir la structure liée par des fibres (10, 10') dans une station de refroidissement (14) du dispositif de convoyage (11), dans lequel le refroidissement dans la station de refroidissement (14) se fait par un refroidissement de surface fermé sur lui-même, en particulier une table de refroidissement, dans lequel le refroidissement de surface est en contact avec le support (20) et/ou avec le couvercle (30, 30') ; et
retirer du support (20) la structure liée par des fibres (10, 10') consolidée ou sortir du dispositif de convoyage (11) le support occupé par la structure liée par des fibres (10, 10') consolidée.

2. Procédé selon l'une des revendications précédentes, **caractérisé en ce que** la structure liée par des fibres (10, 10') consolidée, après avoir été retirée du dispositif de convoyage (11), est amenée à une presse, en particulier une presse de découpage, et/ou le dispositif de convoyage (11) est réalisé rotatif.

3. Procédé selon l'une des revendications précédentes, **caractérisé en ce que,** après que la structure liée par des fibres (10, 10') a été disposée sur le support (20), le support (20) est soulevé du dispositif de convoyage (11) au moyen d'une table de levage (22) et déplacé vers le couvercle (30, 30') et/ou le couvercle (30, 30') est maintenu au-dessus du dispositif de convoyage (11) au moyen d'éléments de retenue (37) et déplacé vers le support (20).

4. Procédé selon l'une des revendications précédentes, **caractérisé en ce que** dès qu'une dépression est formée dans l'espace intermédiaire entre le support (20) et le couvercle (30, 30'), le couvercle (30, 30') est détaché du au moins un élément de retenue (37) et la table de levage (22) dépose l'arrangement formé du support (20), du couvercle (30, 30') et de la structure liée par des fibres (10, 10') placée entre les deux dans le dispositif de convoyage (11), de manière préférée dans la station de chargement/déchargement (12).

5. Procédé selon l'une des revendications précédentes, **caractérisé en ce que** pendant la compression de la structure liée par des fibres (10, 10'), une détection de formation de bulle est réalisée, dans lequel en cas de formation de bulle, la pression dans l'espace intermédiaire est augmentée temporairement et/ou le couvercle (30, 30') est soulevé pour obtenir une réduction au moins partielle de l'appui du support du couvercle (30, 30') sur la structure liée par des fibres (10, 10') et permettre ainsi une voie d'aération locale pour extraire l'air ou la vapeur.

6. Procédé selon la revendication 5, **caractérisé en ce que** la détection de formation de bulle se fait en surveillant la valeur de la dépression dans l'espace intermédiaire, et/ou en relevant au moyen d'un appareil de prise de vues à image thermique la répartition de température dans la structure liée par des fibres (10, 10'), dans lequel en présence endroit froid local détectable dans l'image thermique par rapport à un environnement chaud, on conclut à la présence d'une bulle.

7. Procédé selon l'une des revendications précédentes, **caractérisé en ce que** le refroidissement de surface est conformé en une table de refroidissement, qui peut soulever du dispositif de convoyage (11) l'arrangement formé du support (20), du couvercle (30, 30') et de la structure liée par des fibres (10, 10') placée entre les deux, et mener à un refroidissement supplémentaire au-dessus du couvercle (30, 30').

8. Procédé selon l'une des revendications précédentes, **caractérisé en ce que** la structure liée par des fibres (10, 10') est refroidie dans la station de refroidissement (14) à une température qui est située au-dessous de la température de fusion et au-dessus de la température de ramollissement du au moins un polymère thermoplastique et/ou thermoélastique, ou qui est située au-dessous de la température de ramollissement du au moins un polymère thermoplastique et/ou thermoélastique.

9. Procédé selon l'une des revendications précédentes, **caractérisé en ce que** la structure liée par des fibres (10, 10') est refroidie dans la station de refroidissement (14) à une température située au-dessous de 150°C, de manière préférée au-dessous de 120°C, de manière particulièrement préférée au-dessous de 100°C.

10. Procédé selon l'une des revendications précédentes, **caractérisé en ce que** l'échauffement de la structure liée par des fibres (10, 10') se fait au moyen d'un rayonnement électromagnétique avant, en même temps ou après la compression de la structure liée par des fibres (10, 10') entre le couvercle (30, 30') et le support (20) et/ou le couvercle (30, 30') et/ou le support (20) sont conformés en une plaque de verre ou comprennent celle-ci.

11. Installation pour consolider une structure liée par des fibres (10, 10'), dans laquelle l'installation comprend un dispositif de convoyage (11) comprenant une station de chargement/déchargement (12), une station de chauffage (13) et une station de refroidissement (14) et l'installation est agencée de manière à
déposer, dans la station de chargement/déchargement (12), la structure liée par des fibres (10, 10') sur un support (20) ou introduire un support (20) comprenant une structure liée par des fibres (10, 10') dans l'installation, et positionner un couvercle (30, 30') au-dessus du support (20), et, au moyen d'une pompe à vide, produire une dépression dans l'espace intermédiaire entre le couvercle (30, 30') et le support (20), puis déplacer le support (20) et le couvercle (30, 30') avec la structure liée par des fibres (10, 10') placée entre les deux jusqu'à la station de chauffage (13),
dans la station de chauffage (13), échauffer la structure liée par des fibres (10, 10') au moyen de la au moins une source de rayonnement (14), de manière préférée au moins jusque dans le domaine de la température de fusion du au moins un polymère thermoplastique et/ou thermoélastique, et, au moyen de la pompe à vide, maintenir ou augmenter encore la dépression dans l'espace intermédiaire pour comprimer la structure liée par des fibres (10, 10') entre le couvercle (30, 30') et le support (20), une fois la compression faite, déplacer le support (20) et le couvercle (30, 30') avec la structure liée par des fibres (10, 10') placée entre les deux jusqu'à la station de refroidissement (14) et refroidir dans la station de refroidissement (14) l'arrangement formé du support (20), du couvercle (30, 30') et de la structure liée par des fibres (10, 10') placée entre les deux, dans laquelle dans la station de refroidissement (14) est disposé un refroidissement de surface fermé sur lui-même, de manière préférée une table de refroidissement, au moyen duquel l'arrangement formé du support (20), du couvercle (30, 30') et de la structure liée par des fibres (10, 10') placée entre les deux peut être soulevé et enlevé du dispositif de convoyage (11) et un effet refroidissement peut être obtenu par le support (20) et/ou dans laquelle dans la station de refroidissement (14) est disposé un refroidissement de surface fermé sur lui-même, de manière préférée une table de refroidissement, qui peut être déplacé vers le couvercle (30, 30') et un effet refroidissement peut être obtenu par le couvercle (30, 30') ;
une fois le refroidissement fait, déplacer le support (20) et le couvercle (30, 30') avec la structure liée par des fibres (10, 10') placée entre les deux jusqu'à la station de chargement/déchargement (12), et dans la station de chargement/déchargement (12) détacher le couvercle (30, 30') du support (20) au moyen d'éléments de retenue (37) pour enlever la structure liée par des fibres (10, 10') consolidée du support (20) ou pour enlever le support (20) occupé par la structure liée par des fibres (10, 10') consolidée.

12. Installation selon la revendication 11, comprenant en outre une presse, en particulier une presse de découpage.

13. Installation selon l'une des revendications 11 à 12, **caractérisée en ce que** le dispositif de convoyage (11) est conformé en une table tournante et/ou le couvercle (30, 30') et/ou le support (20) est conformé en une plaque de verre ou comprend celle-ci.

14. Installation selon l'une des revendications 11 à 13, **caractérisée en ce que** dans la station de chargement/déchargement (12) est disposée une table de levage (22) pour éloigner et rapprocher du dispositif de convoyage (11) le support (20) avec la structure liée par des fibres (10, 10') déposée sur lui et/ou un élément de retenue (37) pour retenir le couvercle (30, 30') au-dessus du dispositif de convoyage (11) et l'amener vers le support (20) et l'éloigner de celui-ci.

15. Installation selon l'une des revendications 11 à 14, **caractérisée en ce que** l'installation comprend un capteur pour relever la pression dans l'espace intermédiaire et/ou un appareil de prise de vues à image thermique pour relever une image de la répartition de température dans la structure liée par des fibres (10, 10'), dans laquelle l'installation comprend en outre une unité de commande qui est agencée, lors de la détection d'une brusque augmentation de pression ou d'un endroit froid local par rapport à un environnement chaud détectable dans l'image thermique pour déterminer qu'il y a une bulle, et, en présence d'une bulle, pour donner pour instruction à la pompe à vide et/ou aux dispositifs de support conformés en des actionneurs d'augmenter temporairement la pression dans l'espace intermédiaire et/ou de soulever le couvercle (30, 30') pour obtenir une réduction au moins partielle de l'appui du couvercle (30, 30') sur la structure liée par des fibres (10, 10') et permettre ainsi une voie d'aération locale pour extraire l'air ou la vapeur.
